# EUROPEAN PATENT APPLICATION

(11) **EP 4 498 726 A1**
(43) Date of publication of application: **29.01.2025**
(21) Application number: 23791067.4
(22) Date of filing: 10.04.2023
(51) Int. Cl.: H04W 28/02

(54) **COMMUNICATION METHOD AND APPARATUS**

(30) Priority: 21.04.2022 CN 202210425761
(71) Applicant: Huawei Technologies Co., Ltd., Shenzhen, Guangdong 518129 (CN)
(72) Inventor: LI, Lun, Shenzhen, Guangdong 518129 (CN); WU, Yizhuang, Shenzhen, Guangdong 518129 (CN); CUI, Yang, Shenzhen, Guangdong 518129 (CN); LEI, Ao, Shenzhen, Guangdong 518129 (CN); SUN, Taoran, Shenzhen, Guangdong 518129 (CN)
(74) Representative: Goddar, Heinz J.
(86) International application number: PCT/CN2023/087420
(87) International publication number: WO 2023/202412

(57) **Abstract**

A communication method and apparatus are provided. The method includes: A network repository function network element receives a discovery request message from a first network element, where the discovery request message includes a type of a network element that requests to be discovered. The network repository function network element determines a second network element based on the type of the network element that requests to be discovered. The network repository function network element sends an identifier of a first dataset, a first token, and an identifier of the second network element to the first network element, where the first dataset includes data for evaluating a status of communication between the second network element and another network element, and the first token authorizes the first network element to obtain the first dataset. According to the foregoing designs, the network repository function network element can not only provide, to the first network element, an identifier of a network element of the type of the network element that requests to be discovered, but also provide, to the first network element, information needed for obtaining the dataset, so that the first network element can determine, based on the dataset, whether to access the network element that requests to be discovered this time.

## Description

### CROSS-REFERENCE TO RELATED APPLICATIONS

This application claims priority to Chinese Patent Application No. 202210425761.6, filed with the China National Intellectual Property Administration on April 21, 2022 and entitled "COMMUNICATION METHOD AND APPARATUS", which is incorporated herein by reference in its entirety.

### TECHNICAL FIELD

Embodiments of this application relate to the field of wireless communication, and in particular, to a communication method and apparatus.

### BACKGROUND

Network functions (network functions, NFs) may be implemented by software, and can run on a series of standard physical hardware. As required, the network functions may be migrated, instantiated, and deployed in different locations in a network without installation of new devices. The physical hardware provides, to different network functions by using virtualization technologies, resource capabilities required by the network functions.

A network repository function (network repository function, NRF) network element may evaluate, in an NF registration procedure through a profile and attestation check function (profile and attestation check function, PACF), security of a virtual layer of an NF that requests registration. Therefore, the evaluation is performed at a single dimension and on a fixed occasion.

### SUMMARY

This application provides a communication method and apparatus, to obtain a multi-dimensional evaluation result of an NF.

According to a first aspect, this application provides a communication method. The method includes: A network repository function network element receives a discovery request message from a first network element, where the discovery request message includes a type of a network element that requests to be discovered. The network repository function network element determines a second network element based on the type of the network element that requests to be discovered. The network repository function network element sends an identifier of a first dataset, a first token, and an identifier of the second network element to the first network element, where the identifier of the first dataset is for obtaining the first dataset, the first dataset includes data for evaluating a status of communication between the second network element and another network element, and the first token authorizes the first network element to obtain the first dataset.

According to the foregoing method, the network repository function network element can not only provide, to the first network element, an identifier of a network element of the type of the network element that requests to be discovered, but also provide, to the first network element, information needed for obtaining the dataset, so that the first network element can determine, based on the dataset, whether to access the network element that requests to be discovered this time. According to the foregoing method, the first dataset may be shared by another network element (namely, the first network element) that may communicate with the second network element.

In a possible design, the discovery request message includes indication information indicating to request the identifier of the first dataset and the first token. According to the foregoing design, the indication information may indicate the network repository function network element to provide, to the first network element, an identifier of a dataset for evaluating the network element that is discovered this time and a token having authorization to obtain the dataset.

In a possible design, before the network repository function network element sends the identifier of the first dataset, the first token, and the identifier of the second network element to the first network element, the network repository function network element sends a dataset query request message to a third network element, where the dataset query request message includes the identifier of the second network element. The network repository function network element receives the identifier of the first dataset and the first token from the third network element. According to the foregoing design, the network repository function network element may obtain the identifier of the first dataset and the first token from the third network element.

In a possible design, the first token authorizes the first network element to update the first dataset.

In a possible design, the network repository function network element receives a reselection request message from the first network element, where the reselection request message is used to request to reselect a network element of the same network element type as the second network element. The network repository function network element sends a reselection response message to the first network element, where the reselection response message includes an identifier of a network element reselected for the first network element. It may be understood that, in this case, the reselection request message may include the identifier of the second network element, to indicate the network repository function network element to shield the second network element during the reselection.

In a possible design, the data for evaluating the status of the communication between the another network element and the second network element includes error information or warning information recorded by the another network element in a process of the communication between the another network element and the second network element.

In a possible design, the network repository function network element determines a fourth network element based on the type of the network element that requests to be discovered. The network repository function network element sends an identifier of a second dataset, a second token, and an identifier of the fourth network element to the first network element, where the identifier of the second dataset is for obtaining the second dataset, the second dataset includes data for evaluating a status of communication between the fourth network element and another network element, and the second token authorizes the fourth network element to obtain the second dataset. This may also be understood as: The network repository function network element may provide identifiers of a plurality of network elements and corresponding datasets and tokens to the first network element.

According to a second aspect, this application provides a communication method. The method includes: A first network element sends a discovery request message to a network repository function network element, where the discovery request message includes a type of a network element that requests to be discovered. The first network element receives an identifier of a first dataset, a first token, and an identifier of a second network element from the network repository function network element, where the first token authorizes the first network element to obtain the first dataset, and the second network element is a network element of the type of the network element that requests to be discovered. The first network element obtains the first dataset based on the first token and the identifier of the first dataset, where the first dataset includes data for evaluating a status of communication between the second network element and another network element. The first network element determines, based on the first dataset, whether to access the second network element.

According to the foregoing method, the first network element may not only receive, from the network repository function network element, an identifier of a network element of the type of the network element that requests to be discovered, but also receive information needed for obtaining the dataset, so that the first network element can determine, based on the dataset, whether to access the network element that requests to be discovered this time. According to the foregoing method, the first dataset may be shared by another network element (namely, the first network element) that may communicate with the second network element.

In a possible design, the first token authorizes the first network element to update the first dataset. When the first network element determines, based on the first dataset, to access the second network element, the first network element stores a first event in the first dataset based on the first token, where the first event indicates that the first network element accesses the second network element. When the first network element determines, based on the first dataset, not to access the second network element, the first network element stores a second event in the first dataset based on the first token, where the second event indicates that the first network element does not access the second network element. According to the foregoing design, the first network element may store, in the first dataset, a result indicating whether the second network element is capable of being accessed.

In a possible design, when the first network element determines, based on the first dataset, not to access the second network element, the first network element sends a reselection request message to the network repository function network element, where the reselection request message is used to request to reselect a network element of the same network element type as the second network element. According to the foregoing design, when the first network element determines not to access the second network element, the first network element sends the reselection request message to the network repository function network element, to avoid reselection of the second network element.

In a possible design, the data for evaluating the status of the communication between the another network element and the second network element includes error information or warning information recorded by the another network element in a process of the communication between the another network element and the second network element.

In a possible design, the first network element receives an identifier of a second dataset, a second token, and an identifier of a fourth network element from the network repository function network element, where the second token authorizes the first network element to obtain the second dataset, and the fourth network element is a network element of the type of the network element that requests to be discovered. The first network element obtains the second dataset based on the second token and the identifier of the second dataset, where the second dataset includes data for evaluating a status of communication between the fourth network element and another network element. When the first network element determines not to access the second network element, the first network element determines, based on the second dataset, whether to access the fourth network element. This may also be understood as: The first network element may determine a to-be-accessed network element based on identifiers of a plurality of network elements and corresponding datasets and tokens.

According to a third aspect, this application provides a communication method. The method includes: obtaining, from a network repository function network element, information about a network element that has communicated with a first network element; and sending first indication information to a second network element, where the first indication information indicates the second network element to broadcast, to at least one network element, data for evaluating a status of communication between the second network element and the first network element, and the second network element and the at least one network element are network elements that have communicated with the first network element.

According to the foregoing method, whether the second network element is capable of being accessed can be evaluated, and the second network element is evaluated with reference to data for evaluating a status of communication between the second network element and another network element that has communicated with the second network element, to implement multi-dimensional evaluation on the second network element.

In a possible design, the method further includes: sending, to the network element that has communicated with the first network element, a request message for joining a network element group; and receiving, from the at least one network element and the second network element, response messages for agreeing to join the network element group, where the network element group includes the at least one network element and the second network element. According to the foregoing method, the network element group may be created for evaluating the first network element.

In a possible design, the first indication information includes an identifier of a network element in the network element group and an identifier of the first network element.

In a possible design, the first indication information includes an identifier of a dataset and a token for the second network element, the dataset includes data for evaluating a status of communication between the network element in the network element group and the first network element, and the token for the second network element authorizes the second network element to update the dataset.

In a possible design, before the information about the network element that has communicated with the first network element is obtained from the network repository function network element, a first message is received from a third network element, where the first message is for triggering evaluation on whether the first network element is capable of being accessed. Second indication information is sent to the third network element, where the second indication information indicates the third network element to determine, based on the dataset, whether to access the first network element. According to the foregoing design, the obtaining of the information about the network element that has communicated with the first network element may be triggered based on the first message, and the network element that sends the first message is added to the network element group.

In a possible design, the first message includes a service type of the communication between the first network element and the second network element. Data that is allowed to be broadcast and that is for evaluating a status of communication with the first network element is determined based on the service type. An evaluation rule is sent to the second network element, where the evaluation rule indicates the data that is allowed to be broadcast and that is for evaluating the status of the communication with the first network element. Alternatively, information indicating the service type is sent to the second network element, where the information indicating the service type is for determining data that is allowed to be broadcast and that is for evaluating a status of communication with the first network element. According to the foregoing design, data that is allowed by a network element in the network element group to be broadcast may be indicated, and the second network element may select data that needs to be broadcast, to reduce signaling overheads.

In a possible design, the method further includes: sending third indication information to a verification network element, where the third indication information indicates the verification network element to perform virtual-layer verification on the first network element, and update a virtual-layer verification result to the dataset. According to the foregoing design, the verification network element may be added to the network element group, and the virtual-layer verification result corresponding to the first network element may be updated to the dataset.

In a possible design, after the first indication information is sent to the second network element, a second message is received from a fourth network element, where the second message is for triggering evaluation on whether the first network element is capable of being accessed. The identifier of the dataset and a token for the fourth network element are sent to the fourth network element, where the token for the fourth network element authorizes the fourth network element to obtain the dataset. According to the foregoing design, the dataset may be shared with another network element that needs and expects to evaluate whether the first network element is capable of being accessed.

In a possible design, whether to access the first network element is determined based on the dataset.

In a possible design, the method further includes: when determining, based on the dataset, to access the first network element, storing a first event in the dataset, where the first event indicates that the second network element is accessed; or when determining, based on the dataset, not to access the first network element, storing a second event in the dataset, where the second event indicates that the second network element is not accessed. According to the foregoing design, whether to access the second network element may be updated to the dataset.

In a possible design, the method further includes: sending a reselection request message to the network repository function network element when determining, based on the dataset, not to access the first network element and having established a connection to the first network element, where the reselection request message is used to request to reselect a network element of a same network element type as the first network element. According to the foregoing design, the network element of the same network element type as the first network element may be reselected, and reselection to the first network element can be avoided.

In a possible design, when the information about the network element that has communicated with the first network element is obtained from the network repository function network element, a message that requests the information about the network element that has communicated with the first network element is sent to the network repository function network element; and the information about the network element that has communicated with the first network element is received from the network repository function network element. According to the foregoing design, the information about the network element that has communicated with the first network element can be obtained.

In a possible design, the data for evaluating the status of the communication between the second network element and the first network element includes error information or warning information recorded by the second network element in a process of the communication between the second network element and the first network element.

According to a fourth aspect, this application provides a communication method. The method includes: A first network element sends a first message to a second network element, where the first message is for triggering evaluation on whether a third network element is capable of being accessed. The first network element receives indication information from the second network element, where the indication information indicates the first network element to determine, based on a dataset, whether to access the third network element, the dataset includes data for evaluating a status of communication between at least one network element and the third network element, and the at least one network element is a network element that has communicated with the third network element. The first network element determines, based on the dataset, whether to access the third network element. According to the foregoing method, whether the third network element is capable of being accessed can be evaluated, and the third network element is evaluated with reference to data for evaluating a status of communication between the third network element and another network element that has communicated with the third network element, to implement multi-dimensional evaluation on the third network element.

In a possible design, the indication information includes an identifier of the dataset and a token for the first network element, and the token for the first network element authorizes the first network element to obtain the dataset.

In a possible design, the token for the first network element authorizes the first network element to update the dataset. When the first network element determines, based on the dataset, to access the third network element, the first network element stores a first event in the dataset based on the token for the first network element, where the first event indicates that the first network element accesses the third network element. When the first network element determines, based on the dataset, not to access the third network element, the first network element stores a second event in the dataset based on the token for the first network element, where the second event indicates that the first network element does not access the third network element. According to the foregoing design, whether to access the third network element is updated to the dataset.

In a possible design, the indication information includes an identifier of the at least one network element, and the first network element broadcasts the first event or the second event to the at least one network element. According to the foregoing design, the first network element may determine, based on the identifier of the at least one network element, a network element that needs to receive a broadcast message.

In a possible design, the first message includes a service type of communication between the first network element and the third network element, and the service type is for determining data that is allowed by the at least one network element to be broadcast and that is for evaluating the status of the communication with the third network element.

In a possible design, the method further includes: When the first network element determines, based on the dataset, not to access the third network element and the first network element has established a connection to the third network element, the first network element sends a reselection request message to a network repository function network element, where the reselection request message is used to request to reselect a network element of a same network element type as the third network element. According to the foregoing design, the network element of the same network element type as the third network element may be reselected, and reselection to the third network element can be avoided.

According to a fifth aspect, this application provides a communication method. The method includes: A first network element receives indication information from a second network element, where the indication information indicates the first network element to broadcast, to at least one network element, data for evaluating a status of communication between the first network element and a third network element, and the first network element and the at least one network element are network elements that have communicated with the third network element. The first network element broadcasts, to the at least one network element, the data for evaluating the status of the communication between the first network element and the third network element. According to the foregoing method, whether the third network element is capable of being accessed can be evaluated, and the third network element is evaluated with reference to data for evaluating a status of communication between the third network element and another network element that has communicated with the third network element, to implement multi-dimensional evaluation on the third network element.

In a possible design, before the first network element receives the indication information from the second network element, the first network element receives, from the second network element, a request message for joining a network element group. The first network element sends, to the second network element, a response message for agreeing to join the network element group.

In a possible design, the indication information includes an identifier of a network element in the network element group and an identifier of the third network element, and the network element group includes the first network element and the at least one network element.

In a possible design, the first indication information further includes an identifier of a dataset and a token for the first network element, the dataset includes data for evaluating a status of communication between the network element in the network element group and the third network element, and the token for the first network element authorizes the first network element to update the dataset.

In a possible design, the first network element stores, in the dataset based on the token for the first network element, the data for evaluating the status of the communication between the first network element and the third network element.

In a possible design, the first network element receives data that is broadcast by the at least one network element and that is for evaluating a status of communication between the at least one network element and the third network element. The first network element stores, in the dataset based on the token for the first network element, the data for evaluating the status of the communication between the at least one network element and the third network element.

The foregoing method may be applied to update a database.

In a possible design, the first network element receives an evaluation rule from the second network element, where the evaluation rule indicates data that is allowed to be broadcast and that is for evaluating a status of communication with the third network element. When the first network element broadcasts, to the at least one network element, the data for evaluating the status of the communication between the first network element and the third network element, the first network element broadcasts, to the at least one network element according to the evaluation rule, the data for evaluating the status of the communication between the first network element and the third network element. According to the foregoing method, the data that is allowed to be broadcast can be determined.

In a possible design, the first network element receives, from the second network element, information indicating a service type of the communication between the first network element and the third network element. The first network element determines an evaluation rule based on the service type, where the evaluation rule indicates data that is allowed to be broadcast and that is for evaluating a status of communication with the third network element. When the first network element broadcasts, to the at least one network element, the data for evaluating the status of the communication between the first network element and the third network element, the first network element broadcasts, to the at least one network element according to the evaluation rule, the data for evaluating the status of the communication between the first network element and the third network element. According to the foregoing method, the data that is allowed to be broadcast can be determined.

In a possible design, the data for evaluating the status of the communication between the first network element and the third network element includes error information or warning information recorded by the first network element in a process of the communication between the first network element and the third network element.

According to a sixth aspect, this application further provides an apparatus. The apparatus may perform the foregoing method design. The apparatus may be a chip or a circuit that can perform functions corresponding to the foregoing method, or may be a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is the chip or the circuit, the communication interface may be an input/output interface, for example, an input/output pin, of the chip.

In a possible design, the apparatus includes corresponding functional units, respectively configured to implement the steps in the foregoing method. The function may be implemented by hardware, or may be implemented by hardware executing corresponding software. The hardware or the software includes one or more units that correspond to the foregoing functions.

According to a seventh aspect, this application provides a computer-readable storage medium, where the computer-readable storage medium stores a computer program; and when the computer program is run on an apparatus, the method in any one of the foregoing possible designs is performed.

According to an eighth aspect, this application provides a computer program product, where the computer program product includes a computer program; and when the computer program is run on an apparatus, the method in any one of the foregoing possible designs is performed.

According to a ninth aspect, this application provides a communication system. The system includes an apparatus configured to perform the method according to the first aspect and an apparatus configured to perform the method according to the second aspect.

According to a tenth aspect, this application provides a communication system. The system includes a plurality of apparatuses in an apparatus configured to perform the method according to the third aspect, an apparatus configured to perform the method according to the fourth aspect, or an apparatus configured to perform the method according to the fifth aspect.

### BRIEF DESCRIPTION OF DRAWINGS

FIG. 1 is a diagram of an architecture of a mobile communication system to which this application is applied;
FIG. 2 is a possible RA flowchart applied to this application;
FIG. 3 is a flowchart of a remote attestation-based VNF security solution applied to this application;
FIG. 4 is a diagram of a process that is of attesting whether a distributed cloud platform model is trusted and that is applied to this application;
FIG. 5 is a first overview flowchart of a communication method according to this application;
FIG. 6A and FIG. 6B are a specific flowchart of evaluating a target NF according to this application;
FIG. 7 is a second overview flowchart of a communication method according to this application;
FIG. 8 is a third overview flowchart of a communication method according to this application;
FIG. 9 is a fourth overview flowchart of a communication method according to this application;
FIG. 10 is a first diagram of a structure of an apparatus according to this application; and
FIG. 11 is a second diagram of a structure of an apparatus according to this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. In the specification, claims, and accompanying drawings of this application, terms "first", "second", corresponding term numbers, and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, terms "include", "contain" and any other variants mean to cover non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

The technical solutions provided in embodiments of this application may be applied to various communication systems. For example, the technical solutions may be applied to an LTE system or a 5G system, and may also be applied to another future-oriented new system. This is not specifically limited in embodiments of this application. In addition, the terms "system" and "network" may be interchanged. The following merely uses an architecture of a 5G communication system as an example for description.

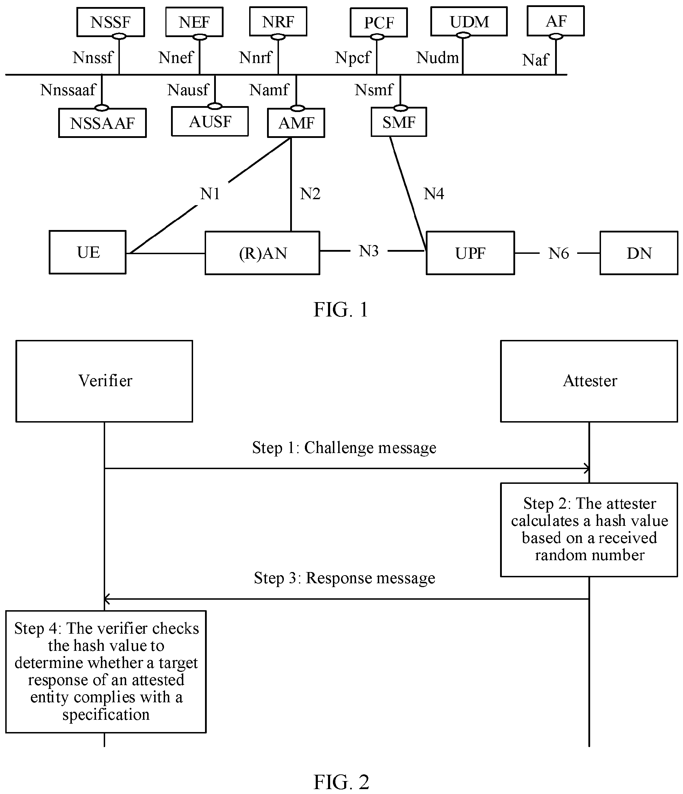

FIG. 1 shows a 5G communication system formulated in a 3rd generation partnership project (3rd generation partnership project, 3GPP) standard. The communication system includes a terminal device (for example, user equipment (user equipment, UE)), an access network (access network, AN) (for example, a radio access network (radio access network, RAN)), a core network (Core network, CN), and a data network (data network, DN). Logically, network elements in the core network may be divided into a user plane and a control plane. The control plane is responsible for mobile network management, and the user plane is responsible for service data transmission.

The terminal device is an ingress for a mobile user to interact with a network, and can provide a basic computing capability and storage capability, display a service window to the user, and receive an operation input of the user. A next-generation terminal device (NextGen UE) may establish a signal connection and a data connection to the RAN by using a new radio technology, to transmit a control signal and service data to the mobile network. The terminal device may include various handheld devices, vehicle-mounted devices, wearable devices, and computing devices that have a wireless communication function or other processing devices connected to a wireless modem, and terminals in various forms, such as a mobile station (mobile station, MS), a terminal (terminal), and a soft terminal, for example, a water meter, an electricity meter, and a sensor.

The RAN is deployed in a location near the terminal device, provides a network access function for an authorized user in a specific area, and can determine transmission tunnels of different quality based on a user level, a service requirement, or the like to transmit user data. The RAN can manage and appropriately use resources of the RAN, and provide an access service to the terminal device as required; and is responsible for forwarding a control signal and the user data between the terminal device and the core network.

The core network is responsible for maintaining subscription data of the mobile network, managing network elements in the mobile network, and providing functions such as session management, mobility management, policy management, and security authentication to the terminal device. When the terminal device is attached, the core network provides network access authentication for the terminal device. When the terminal device has a service request, the core network allocates a network resource to the terminal device. When the terminal device moves, the core network updates the network resource for the terminal device. When the terminal device is idle, the core network provides a fast recovery mechanism for the terminal device. When the terminal device is detached, the core network releases the network resource for the terminal device. When the terminal device has service data, the core network provides a data routing function for the terminal device, for example, forwards uplink data to the data network; or receives downlink data for the terminal device from the data network, and forwards the downlink data to the RAN, so that the RAN sends the downlink data to the terminal device.

The data network (data network, DN) is a data network that provides a service to the user. Generally, a client is in the terminal device, and a server is in the data network. The data network may be a private network, for example, a local area network; may be an external network, for example, the internet (Internet), that is not managed or controlled by an operator; or may be a dedicated network, for example, a network that provides an IP multimedia core network subsystem (IP multimedia core network subsystem, IMS) service, jointly deployed by operators.

The user plane of the core network includes a user plane function (user plane function, UPF). The control plane of the core network includes an access and mobility management function (access and mobility management function, AMF), a session management function (session management function, SMF), a network exposure function (network exposure function, NEF), a network function repository function (NF repository function, NRF), a unified data management (unified data management, UDM), a policy control function (policy control function, PCF), an application function (application function, AF), an authentication server function (authentication server function, AUSF), a network slice selection function (network slice selection function, NSSF), and a network slice-specific authentication and authorization function (network slice-specific authentication and authorization function, NSSAAF).

The control plane of the core network uses a service-based architecture. A point-to-point communication mode in a traditional architecture is replaced with a service invoking mode for interaction between control plane network elements. In the service-based architecture, a control plane network element exposes a service to another control plane network element for invoking by the another control plane network element. In point-to-point communication, a set of specific messages are stored in a communication interface between the control plane network elements, and can be used only by control plane network elements at two ends of the interface during communication.

The following briefly describes functions of the functional entities in the core network.
1. The session management network element is mainly used for session management, assignment and management of an IP address of the terminal device, selection and management of a user plane function, termination of interfaces toward a policy control function or a charging function, downlink data notification, and the like. In 5G communication, the session management network element may be an SMF network element. In future communication such as 6G communication, the session management function network element may still be the SMF network element or have another name. This is not limited in this application. Nsmf is a service-oriented interface provided by the SMF. The SMF may communicate with another network function through Nsmf.
2. The access management network element is mainly used for mobility management, access management, and the like, and may be, for example, a mobility management entity (mobility management entity, MME) function in a 4G communication network or an AMF network element in a 5G network. In the future communication such as the 6G communication, the access management network element may still be the AMF network element or have another name. This is not limited in this application. Namf is a service-oriented interface provided by the AMF. The AMF may communicate with another network function through Namf.
3. The network exposure network element is configured to securely expose, to the outside, a service, a capability, and the like that are provided by a 3GPP network function. In the 5G communication, the network exposure network element may be a NEF network element. In the future communication such as the 6G communication, the network exposure function network element may still be the NEF network element or have another name. This is not limited in this application. Nnef is a service-oriented interface provided by the NEF. The NEF may communicate with another network function through Nnef.
4. The network repository network element is configured to provide service registration, discovery, and authorization, and maintain available network function (network function, NF) instance information, to implement on-demand configuration of a network function and a service and interconnection between NFs. In the 5G communication, the network repository network element may be an NRF network element. In the future communication such as the 6G communication, the network repository function network element may still be the NRF network element or have another name. This is not limited in this application. Nnrf is a service-oriented interface provided by the NRF. The NRF may communicate with another network function through Nnrf.
5. The policy control network element is used for a unified policy framework to govern network behavior, providing of policy rule information to a control plane function network element (for example, the AMF or the SMF), or the like. In the 5G communication, the policy control network element may be a PCF network element. In the future communication such as the 6G communication, the policy control network element may still be the PCF network element or have another name. This is not limited in this application. Npcf is a service-oriented interface provided by the PCF. The PCF may communicate with another network function through Npcf.
6. The data management network element is used for user identification handling, subscription, access authentication, registration, mobility management, or the like. In the 5G communication, the data management network element may be a UDM network element. In the future communication such as the 6G communication, the data management network element may still be the UDM network element or have another name. This is not limited in this application. Nudm is a service-oriented interface provided by the UDM. The UDM may communicate with another network function through Nudm.
7. The application network element is used for application influence on data routing, access to the network exposure function, interaction with a policy framework to perform policy control, or the like. In the 5G communication, the application network element may be an AF network element. In the future communication such as the 6G communication, the application network element may still be the AF network element or have another name. This is not limited in this application. Naf is a service-oriented interface provided by the AF. The AF may communicate with another network function through Naf.
8. The user plane network element is used for packet routing and forwarding, quality of service (quality of service, QoS) handling for user plane data, or the like. In the 5G communication, the user plane network element may be a user plane function (user plane function, UPF) network element. In the future communication such as the 6G communication, the user plane network element may still be the UPF network element or have another name. This is not limited in this application.
9. The authentication server network element is mainly configured to perform user authentication or the like. In the 5G communication, the authentication server network element may be an AUSF network element. In the future communication such as the 6G communication, the authentication server network element may still be the AUSF network element or have another name. This is not limited in this application. Nausf is a service-oriented interface provided by the AUSF. The AUSF may communicate with another network function through Nausf.
10. The network slice selection function network element is configured to select a network slice for the terminal device. In the 5G communication, the network slice selection function network element may be an NSSF network element. In the future communication such as the 6G communication, the network slice selection function network element may still be the NSSF network element or have another name. This is not limited in this application.
11. The network slice-specific authentication and authorization function network element is mainly responsible for authentication and authorization of a network slice, and may interact with an authentication, authorization, and accounting server (authentication, authorization, and accounting server, AAA-S) through an authentication, authorization, and accounting proxy (authentication, authorization, and accounting proxy, AAA-P).

It may be understood that the core network may further include another network element. This is not limited in this application.

For ease of understanding of embodiments of this application, several basic concepts in embodiments of this application are briefly described.

### 1. Network functions virtualization (Network Functions Virtualization, NFV)

The NFV means separating network functions of many traditional types of network devices (such as servers, storage units, and switches) from physical devices of the network functions and enabling the network functions to run in a software form on commercial off-the-shelf (commercial off-the-shelf, COTS), in other words, forming a virtual machine (virtual machine, VM) through virtualization by using a virtualization technology of an information technology (information technology, IT), and then deploying a traditional communications technology (communications technology, CT) service on the VM. In the NFV, many different types of network devices, such as servers, switches, and storage units, may be integrated into industry standards, and may be deployed in any data center, network node, or user home.

The NFV is deployed on network functions virtualization infrastructure (network functions virtualization infrastructure, NFVI), and is a group of resources for hosting and connecting virtual functions. Specifically, the NFVI is a cloud data center that includes a server, a virtualization management program (hypervisor), an operating system, a virtual machine, a container (container), a virtual switch, and a network resource.

A virtual network function (virtual network function, VNF) is a software application that provides a network function (for example, file sharing, a directory service, and IP address configuration). For all network element function components, the VNF is a software group that provides a network service, and is deployed in a virtual machine, a container, or a physical machine by using infrastructure provided by the NFVI.

It may be understood that the VNF is an implementation of an NF. Specifically, when the NF is implemented through the NFV, the NF is referred to as the VNF.

### 2. Network data analytics function (network data analytics function, NWDAF)

The network data analytics function (network data analytics function, NWDAF) is mainly configured to analyze various types of network data. A source of the network data may include but is not limited to network running data collected from an NF, statistics data that is obtained from an operations, administration, and maintenance (operations, administration, and maintenance, OAM) system and that is related to a terminal device and a network, or application data obtained from a third-party application function (application function, AF). Correspondingly, an analysis result generated by the NWDAF may also be output to the NF, the OAM, or the third-party AF. Further, the NF, the OAM, or the AF may perform different optimization operations by using the analysis result of the NWDAF.

### 3. Remote attestation (remote attestation, RA)

In recent years, as quantities of embedded systems, cyber-physical systems, and internet-of-things devices significantly increase, these devices have been involved in many scenarios, such as households, offices, and factories, of daily life. Connecting these devices to the internet brings great convenience, but expands attack surfaces of attackers. In addition, as users become increasingly dependent on smart devices, security of these smart devices becomes more important. During driver upgrade, malware may affect the security or steal private data. Moreover, the malware may turn a vulnerable smart device node into a "zombie" device, in other words, maliciously control the smart device node to become a source of a distributed denial-of-service (distributed denial-of-service, DDoS) attack.

However, due to cost, size, and power constraints, the security is typically not a key priority for low-end device manufacturers. Therefore, it is unrealistic for these devices to prevent attacks. Because it is difficult to prevent an attacker from damaging a device, a remote attestation process needs to be performed to check whether the device has been infected.

The remote attestation is a unique security service that allows an attester (attester) to obtain data and send the data to a verifier (verifier) to verify or reason about an internal state (including memory and storage) of a remote untrusted party that may be infected with malware.

In addition, the remote attestation may be extended to allow for a remote code update. Therefore, the remote attestation may be for securely updating software running on a device, resetting an infected device, or erasing a device.

FIG. 2 is a possible RA flowchart. The following procedure complies with a "challenge and response (challenge and response)" protocol, and may be specifically implemented through four steps.

Step 1: A verifier sends a challenge message to an attester, where the challenge message includes request information and a reference value, for example, a random number, and the request information requests the attester to perform attestation.

Step 2: The attester calculates a hash value through the attestation or another approach based on the received random number.

Step 3: The attester sends a response message to the verifier, where the response message includes the hash value.

The response message may be determined through calculation, signature, or another operation.

Step 4: The verifier verifies that the response message sent by the attester uniquely corresponds to the challenge message in step 1, and checks the hash value to determine whether an attested entity complies with a specification.

### 4. Distributed ledger technology (distributed ledger technology, DLT)

For example, the distributed ledger technology may be implemented by a blockchain (blockchain).

Initial Bitcoin blockchain innovation replies on a public and untrusted network that can be accessed without permission. However, for most industries, service rules, performance, scale requirements, and most important regulatory rules and policies are not suitable for a public network or a mode in which a node can perform access without permission.

Therefore, the technology is driven to evolve from the initial Bitcoin blockchain innovation to a permissioned (permissioned) mode, in other words, a "permissioned-distributed ledger technology (permissioned-distributed ledger technology)" network is created. The permissioned-distributed ledger technology may be understood as a private community with clear control, a known member, and a member standard. Emergence of the distributed ledger technology may improve a workflow, enable a check on a cross-industry service workflow and strive to rebuild a new service mode on a shared, secure, and private information platform.

In terms of a consensus mechanism, almost anyone can participate in a permissionless DLT, and each participant is anonymous. In this case, there is no trust before a DLT state reaches an immutable block depth. To make up for this lack of trust, in the permissionless DLT, a consensus mechanism, for example, "proof-of-work", is usually combined with an economic incentive, for example, a transaction fee, to counteract special energy consumption costs for participating in the "proof-of-work".

The permissioned DLT is operated by a group of known, identified, and examined participants that work in a governance model in which a specific degree of trust is generated. The permissioned DLT provides a method to protect interaction between a group of entities that have a common target but may not fully trust each other. By relying on identities of the participants, the DLT may use a more traditional crash fault tolerance (crash fault tolerance, CFT) or Byzantine fault tolerance (byzantine fault tolerance, BFT) consensus protocol without expensive proof-of-work. In addition, in the permissioned DLT, a risk of intentionally introducing malicious code by a participant through a smart contract is reduced. First, the participants know each other and all operations. Transaction submission, network configuration modification, and deployment of a smart contract are all recorded in the DLT based on an endorsement policy that has been determined in a network and a related transaction type. In comparison with full anonymity, it is easy to identify a perpetrator and perform processing according to an item of the governance model.

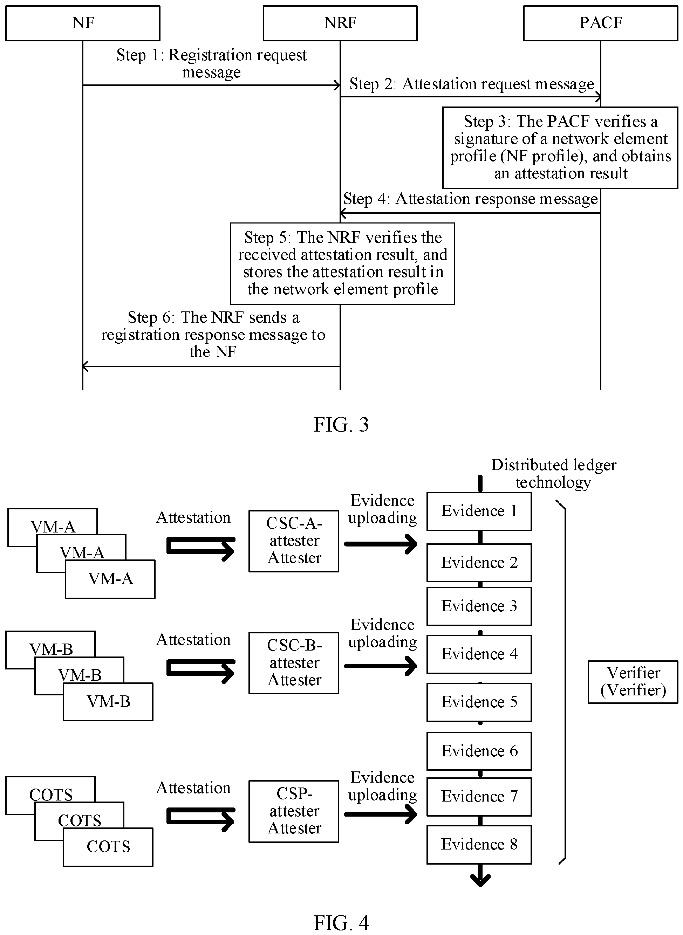

In an existing solution, a VNF in which an NF is located is attested during registration of the NF. This solution is also referred to as a remote attestation-based VNF security solution. FIG. 3 is a flowchart of a remote attestation-based VNF security solution. Specific steps are as follows:

Step 1: The NF sends a registration request (Nnrf_management_NFRegister_request) message to an NRF. The message includes a network element profile (NF profile).

For example, the NF herein may be an NF service consumer (namely, an NF instance).

Step 2: The NRF initiates an attestation request (attestation_request) message to a PACF, where the attestation request message includes a signed network element profile (NF profile).

Step 3: The PACF verifies a signature of the NF profile, and obtains an attestation result.

For example, the PACF may not directly attest the NF, but requests a network functions virtualization management and orchestration (NFV MANO) verifier to attest the NF.

Step 4: The PACF sends an attestation response (attestation_response) message to the NRF.

For example, the attestation response message includes the attestation result and a signature result that are received from the NFV MANO verifier.

The signature result is signature information of an attester for the attestation result.

Step 5: The NRF verifies the received attestation result, and stores the attestation result in the NF profile.

Step 6: The NRF sends a registration response (Nnrf_management_NFRegister_ response) message to the NF, where the message indicates that the registration of the NF succeeds.

It can be learned that in the foregoing procedure, the NRF can receive only attestation performed by the PACF on a virtual layer of the NF, and cannot obtain service information for the network element and evaluation related to the service information that are from another network element in another service-based architecture (service-based architecture, SBA). In addition, the foregoing procedure is limited only to a scenario in which the attestation is triggered when the NF actively requests the registration with the NRF. In another procedure, detection on whether the NF is a normal network element (or a trusted network element) cannot be triggered for the NF.

In another existing solution, in a distributed cloud platform model, an attester can attest only a part to which the attester belongs. For example, as shown in FIG. 4, the attester includes a cloud service client (cloud service client, CSC) attester (for example, a CSC-A-attester and a CSC-B-attester) and a cloud service provider (cloud service provider, CSP) attester (for example, a CSP-attester).

When a verifier (verifier) of global attestation attests whether an entire cloud platform is trusted, the cloud service client attester needs to attest a virtual machine (VM), and the cloud service provider attester needs to attest commercial off-the-shelf (commercial off-the-shelf, COTS). All the attesters (including the cloud service client attester and the cloud service provider attester) may upload, to a unified DLT by using a distributed ledger technology, evidence obtained through the attestation. The evidence is shared based on features such as tamper-resistance of the DLT to establish a trust relationship between each other at run time. Further, when the verifier of the global attestation verifies global security (namely, trust or security of the entire cloud platform), the verifier may perform unified verification on all the evidence. When all the evidence is successfully verified, the entire cloud platform is attested to be trusted.

For example, the CSC-A-attester attests several VMs-A, to obtain evidence 1 to evidence 3, and uploads the evidence 1 to the evidence 3 to the DLT. The CSC-B-attester attests several VMs-B, to obtain evidence 4 to evidence 6, and uploads the evidence 4 to the evidence 6 to the DLT. The CSP-attester attests several pieces of COTS to obtain evidence 7 and evidence 8, and uploads the evidence 7 and the evidence 8 to the DLT. Further, the verifier may determine, by verifying the evidence 1 to the evidence 8, whether the entire cloud platform is trusted.

It can be learned that the DLT is established to enable different CSCs and CSPs to share an attestation result, to help the verifier globally attest whether the entire cloud platform is trusted. Attested content is limited only to the virtual machine and the device, a specific VM on the CSC is not evaluated, and the VM cannot be evaluated for data of a service carried by the VM on the CSC.

In view of this, an embodiment of this application provides a communication method, to perform multi-dimensional evaluation on a network function.

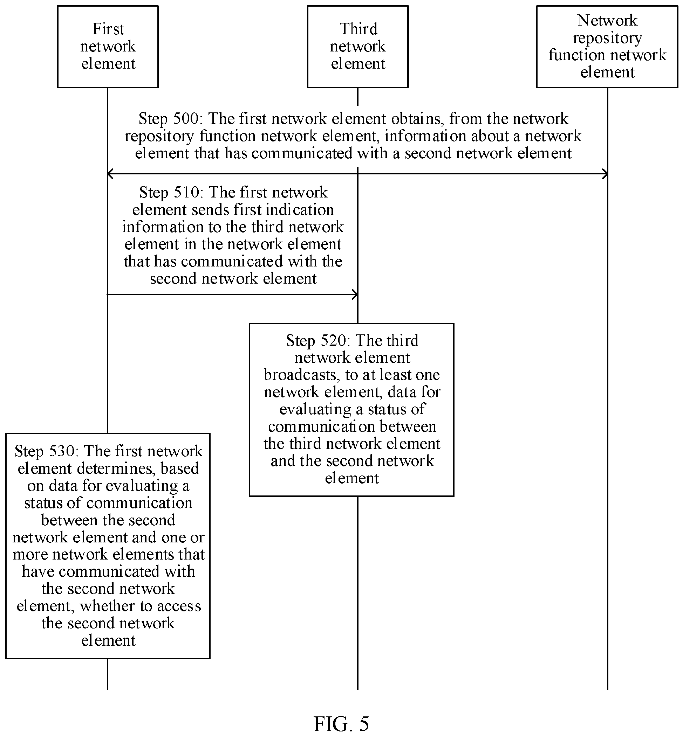

As shown in FIG. 5, the method includes the following steps.

Step 500: A network element #1 obtains, from a network repository function network element, information about a network element that has communicated with a network element #2.

The following first describes possible implementations of the network element #1.

Manner 1: The network element #1 may be a network element that needs to establish a communication connection to the network element #2. In this case, the network element #1 may obtain, from the network repository function network element, the information about the network element that has communicated with the network element #2. For example, the network element #1 may also be referred to as a customer network function (customer network function, CustomerNF) network element. In other words, evaluation on whether the network element #2 is capable of being accessed is triggered by the network element #1.

For example, the network element #1 may obtain, from the network repository function network element in a scenario in which the network element #1 communicates with the network element #2 for the first time, the information about the network element that has communicated with the network element #2. The following enumerates examples of a specific scenario. It may be understood that the following scenarios constitute no limitation on this application.

Scenario 1: When a terminal device establishes a protocol data unit (protocol data unit, PDU) session, an AMF network element (corresponding to the network element #1) selects an SMF network element (corresponding to the network element #2).

Scenario 2: When a terminal device establishes a PDU session, an SMF network element (corresponding to the network element #1) selects a UPF network element (corresponding to the network element #2).

Scenario 3: In a mobility management scenario, a source AMF network element (corresponding to the network element #1) selects a new AMF network element (corresponding to the network element #2) for session handover of a terminal device.

Scenario 4: In a roaming scenario, a visited network function (visited NF, V-NF) network element (corresponding to the network element #1) finds a home network function (home VF, H-NF) (corresponding to the network element #2) for interaction.

Manner 2: The network element #1 may be a network element having an analytics function, or may be referred to as an analytics network element. For example, the network element #1 may be an NWDAF network element. Alternatively, the network element #1 may be a network element co-located with another network element, for example, an AMF network element or an SMF network element, that has an analytics function. In other words, evaluation on whether the network element #2 is capable of being accessed is triggered by a network element other than the network element #1.

For example, in a service procedure, a network element (for example, a CustomerNF network element) that needs to establish a communication connection to the network element #2 may send a first message to the network element #1, where the first message is for triggering the evaluation on whether the network element #2 is capable of being accessed, so that the network element #1 may obtain, from the network repository function network element based on the first message, the information about the network element that has communicated with the network element #2. For example, the network element that needs to establish the communication connection to the network element #2 may trigger the sending of the first message to the network element #1 in the foregoing scenario 1 to scenario 4. The first message may include an identifier of the network element #2. Optionally, the first message may further include a type of the network element #2. Particularly, in a scenario in which one network element cannot be uniquely determined by using the identifier of the network element #2, the network element, namely, the network element #2, may be uniquely determined by using the identifier of the network element #2 and the type of the network element #2. It should be noted that, in the following, in a scenario in which a network element cannot be uniquely determined by using an identifier of the network element, the network element may be determined by using the identifier of the network element and a type of the network element, in other words, both the identifier of the network element and the type of the network element need to be sent. That the first message is for triggering the evaluation on whether the network element #2 is capable of being accessed may also be described as: The first message is for triggering evaluation on whether the network element #2 is an abnormal network element or a trusted network element.

For the foregoing two implementations, the network element #2 may be referred to as an evaluated network element or a to-be-evaluated network element, or may be referred to as a target network element. For example, the network element #2 may be a target network function (target network function, TargetNF) network element.

In a possible implementation, when the network element #1 obtains, from the network repository function network element, the information about the network element that has communicated with the network element #2, the network element #1 may send a request message to the network repository function network element, where the request message requests the information about the network element that has communicated with the network element #2, and the request message includes the identifier of the network element #2. The network repository function network element sends, to the network element #1, the information about the network element that has communicated with the network element #2. The information about the network element that has communicated with the network element #2 may include an identifier of the network element that has communicated with the network element #2. For example, if the network element that has communicated with the network element #2 includes a network element A, a network element B, and a network element C, the information about the network element that has communicated with the network element #2 may include an ID of the network element A, an ID of the network element B, and an ID of the network element C.

In addition, if a network element that receives the identifier of the network element determines that communication with the network element cannot be performed based only on the identifier of the network element, an address of the network element may be queried based on the identifier of the network element or based on the identifier of the network element and the type of the network element. Alternatively, in a scenario in which communication with the network element cannot be performed based only on the identifier of the network element, the information about the network element that has communicated with the network element #2 may further include an address of the network element. It should be noted that, in the following, in the scenario in which the communication with the network element cannot be performed based only on the identifier, the address of the network element may also be sent. In a scenario in which the network element cannot be uniquely determined by using the identifier and the address, the type of the network element may also be sent.

For example, the network element #1 may separately send the request message to one or more network repository function network elements. If a network repository function network element that receives the request message determines that the information about the network element that has communicated with the network element #2 is stored, the network repository function network element sends, to the network element #1, the stored information about the network element that has communicated with the network element #2.

It should be noted that the network repository function network element may receive a discovery request message from a network element A, where the discovery request message includes a type of a network element that requests to be discovered. The network repository function network element may determine at least one network element based on the type of the network element that requests to be discovered, and send an identifier of the at least one network element to the network element A. Further, the network element A may select one network element from the at least one network element for communication. If the identifier of the at least one network element includes the identifier of the network element #2, when receiving the request message from the network element #1, the network repository function network element determines that information about a network element that may establish a communication connection to the network element #2 is stored, in other words, the network element that may establish the communication connection to the network element #2 herein is the network element A. Because the network repository function network element does not sense whether the network element A selects the network element #2 to establish the communication connection (in other words, the network repository function network element cannot determine whether the network element A is a network element that has communicated with the network element #2), the network repository function network element sends, to the network element #1, the information about the network element that may establish the communication connection to the network element #2, to be specific, the information about the network element that may establish the communication connection to the network element #2 includes the information about the network element that has communicated with the network element #2 and/or information about a network element that has not communicated with the network element #2.

Step 510: The network element #1 sends first indication information to a network element #3, where the first indication information indicates the network element #3 to broadcast, to at least one network element, data for evaluating a status of communication between the network element #3 and the network element #2. The network element #3 and the at least one network element are network elements that have communicated with the network element #2.

In a possible implementation, after obtaining the information about the network element that has communicated with the network element #2, the network element #1 may initiate establishment of a network element group for evaluating whether the network element #2 is capable of being accessed. All network elements that have communicated with the network element #2 may belong to the network element group, or a part of network elements that have communicated with the network element #2 may belong to the network element group. In addition, the network element group herein may also be referred to as a consensus group, an evaluation group for the network element #2, or the like. A network element in the network element group may also be referred to as a participant or a participant network element. This is not limited in this application.

For example, the network element #1 separately sends, to the network element that has communicated with the network element #2, a request message for joining the network element group, and receives, from at least one network element in the network element that has communicated with the network element #2, a response message for agreeing to join the network element group. In this case, the network element that sends the response message for agreeing to join the network element group forms a network element group, in other words, the network element group includes the at least one network element. The at least one network element includes the network element #3 and one or more other network elements. The request message for joining the network element group may include the identifier of the network element that has communicated with the network element #2 and the identifier of the network element #2. In addition, the request message for joining the network element group may further include an evaluation rule. For details, refer to the following related descriptions of the evaluation rule. The response message for agreeing to join the network element group may include an identifier of the network element that agrees to join the network element group.

For example, the network elements that have communicated with the network element #2 include the network element A, the network element B, and the network element C. All the network element A, the network element B, and the network element C receive the request message for joining the network element group. Both the network element A and the network element B send, to the network element #1, the response message for agreeing to join the network element group, and the network element C sends, to the network element #1, a response message for not agreeing to join the network element group. In this case, the network element A and the network element B form a network element group.

The following only uses the network element #3 as an example to describe how a network element that receives the request message for joining the network element group determines whether to join the network element group.

Example 1: The network element #3 may determine, based on pre-configuration information of an operator, whether to join the network element group.

Example 2: If the request message for joining the network element group further includes a service type of communication between the network element #1 and the network element #2, the network element #3 may determine, based on the service type, whether to join the network element group.

For example, an AMF network element joins only a network element group for a scenario in which an AMF network element selects an SMF network element, an NRF joins only a network element group for a network element registration scenario, and a gNB joins only a network element group for a gNB handover scenario.

Example 3: The network element #3 determines, based on service load and/or a system resource occupation status of the network element #3, whether to join the network element group.

For example, the request message for joining the network element group may further include an identifier of a network element that requests to join the network element group and/or end time for writing into a dataset. The network element #3 may determine, when determining that a quantity of network elements that request to join the network element group is greater than a preset quantity, not to join the network element group. It may be understood that, when a quantity of network elements included in the network element group is large, a large quantity of broadcast messages need to be received and processed. Consequently, load of a processor is heavy, and memory occupation is high. The network element #3 may further determine broadcast duration based on the end time for writing into the dataset. When the broadcast duration is greater than preset duration, the network element #3 determines not to join the network element group. It may be understood that, when the broadcast duration is long, the network element #3 needs to receive a broadcast message in a long period of time. This may affect another service to some extent.

It may be understood that the foregoing example 1 to example 3 are merely examples, and are not intended to limit this application.

Further, the network element #1 determines, based on the received response message for agreeing to join the network element group, the network element included in the network element group. The network element #1 may separately send corresponding indication information to the network element in the network element group. The following only uses first indication information sent to the network element #3 as an example for description.

In a possible design, the first indication information may include an identifier of the network element in the network element group and the identifier of the network element #2. The identifier of the network element in the network element group is for verifying whether a network element that performs broadcasting belongs to the network element group, and broadcasting data to these network elements. The identifier of the network element #2 indicates the evaluated network element.

The first indication information may further include an identifier of the dataset and a token for the network element #3. The dataset includes data for evaluating a status of communication between the network element in the network element group and the network element #2. The token for the network element #3 authorizes the network element #3 to update the dataset.

The dataset may be a blockchain, a distributed ledger technology, or the like. For example, the dataset is a permissioned DLT. This is not limited in this application. The dataset may be stored in each network element in the network element group or in a dedicated network element. It may be understood that there may be one or more dedicated network elements. When there are a plurality of dedicated network elements, and different dedicated network elements maintain different datasets, the first indication information further needs to include address information corresponding to the identifier of the dataset, to notify the network element in the network element group of a location of written data, namely, a dedicated network element that maintains the dataset.

In other words, if the dataset may be stored in each network element in the network element group, the indication information may include only the identifier of the dataset. If the dataset is stored in the dedicated network element, the indication information needs to include the identifier of the dataset and an address corresponding to the identifier of the dataset, to notify a network element that receives the indication information of an address for writing the broadcast data. In this case, the dataset does not need to be stored in each network element, so that network overheads can be reduced.

It should be noted that tokens for different network elements in the network element group are different. For example, the network element A and the network element B form the network element group. The network element #1 sends indication information for the network element A to the network element A. The indication information may include the identifier of the network element A, the identifier of the network element B, the identifier of the network element #2, an identifier of the DLT, and a token for the network element A. The network element #1 sends indication information for the network element B to the network element B. The indication information may include the identifier of the network element A, the identifier of the network element B, the identifier of the network element #2, the identifier of the DLT, and a token for the network element B. It should be noted that the token for the network element A is different from the token for the network element B.

The first indication information may further include the end time for writing into the dataset or start time for evaluation, so that the network element in the network element group may broadcast data based on the time. The end time for writing into the dataset may also be referred to as end time for broadcasting. For example, the network element #3 may start to broadcast data after receiving the first indication information, stop broadcasting the data at the end time for writing into the dataset, and stop receiving broadcast data sent by another network element. The start time for evaluation is start time for determining, by the network element in the network element group by using a preset consensus algorithm, whether received data is valid.

**Table 1**

| NF included in the network element group | NFs included in the network element group | Types (Types) of the NFs included in the network element group | Token (Token) |
|---|---|---|---|
| NF1 | NF1, NF2, and NF3 | NF1 is the SMF, NF2 is the AMF, and NF3 is the NRF | Token_NF1 |
| NF2 | NF1, NF2, and NF3 | NF1 is the SMF, NF2 is the AMF, and NF3 is the NRF | Token_NF2 |
| NF3 | NF1, NF2, and NF3 | NF1 is the SMF, NF2 is the AMF, and NF3 is the NRF | Token_NF3 |

As enumerated in Table 1, it is assumed that the network element group includes NF1, NF2, and NF3, NF1 is the SMF, NF 2 is the AMF, and NF3 is the NRF. The first column enumerates the NF included in the network element group that is alternatively described as the NF that receives the indication information. The second column to the fourth column are specific content included in the indication information. Content of indication information sent to different NFs is not completely the same, and each piece of indication information may further include other content. This is not limited in this application.

In addition, in a possible implementation, the network element #1 may further indicate data that is allowed by the network element #3 to be broadcast and that is for evaluating the status of the communication with the network element #2. It may be understood that there may be a plurality of pieces of data for evaluating the status of the communication between the network element #3 and the network element #2. The data that is allowed by the network element #3 to be broadcast and that is for evaluating the status of the communication with the network element #2 is indicated, so that the network element #3 may select data that needs to be broadcast, to further reduce signaling overheads.

The following only uses a manner A and a manner B as examples to describe how to indicate the data that is allowed by the network element #3 to be broadcast and that is for evaluating the status of the communication with the network element #2.

Manner A: The network element #1 may determine, based on the service type of the communication between the network element #1 and the network element #2, data that is allowed to be broadcast and that is for evaluating a status of communication with the network element #2, and send the evaluation rule to the network element #3, where the evaluation rule indicates the data that is allowed to be broadcast and that is for evaluating the status of the communication with the network element #2. The evaluation rule may be separately sent, or may be carried in the first indication information or the request message for joining the network element group. Correspondingly, the network element #3 broadcasts, according to the evaluation rule, the data for evaluating the status of the communication between the network element #3 and the network element #2.

For example, the network element #1 may store pre-configuration information or an operator rule. The pre-configuration information or the operator rule may indicate a correspondence between a service type and data that is allowed to be broadcast. Further, the network element #1 may determine, based on the service type of the communication between the network element #1 and the network element #2 and the correspondence, the data that is allowed to be broadcast and that is for evaluating the status of the communication with the network element #2.

Manner B: The network element #1 may send, to the network element #3, information indicating the service type of the communication between the network element #1 and the network element #2, where the information is for determining data that is allowed to be broadcast and that is for evaluating a status of communication with the network element #2. The information indicating the service type of the communication between the network element #1 and the network element #2 may be separately sent, or may be carried in the first indication information or the request message for joining the network element group. Correspondingly, the network element #3 determines, based on the service type, the data that is allowed to be broadcast and that is for evaluating the status of the communication with the network element #2. The network element #3 broadcasts, based on the data that is allowed to be broadcast and that is for evaluating the status of the communication with the network element #2, the data that is for evaluating the status of the communication between the network element #3 and the network element #2.

For example, the network element #3 may store pre-configuration information or an operator rule. The pre-configuration information or the operator rule may indicate a correspondence between a service type and data that is allowed to be broadcast. Further, the network element #3 may determine, based on the service type of the communication between the network element #1 and the network element #2 and the correspondence, the data that is allowed to be broadcast and that is for evaluating the status of the communication with the network element #2.

It may be understood that, both the manner A and the manner B are combined with a scenario in which the possible implementation of the network element #1 is the manner 1 (in other words, the evaluation on whether the network element #2 is capable of being accessed is triggered by the network element #1). In a scenario in which the possible implementation of the network element #1 is the manner 2 (in other words, the evaluation on whether the network element #2 is capable of being accessed is triggered by the network element other than the network element #1), the service type is a service type of communication between the network element #2 and the network element that needs to establish the communication connection to the network element #2. Other content is similar to that in the manner A and the manner B, and details are not described herein again. For example, in this case, the service type may be carried in the first message.

Step 520: The network element #3 broadcasts, to the one or more other network elements in the network element that has communicated with the network element #2, the data for evaluating the status of the communication between the network element #3 and the network element #2.

In a possible design, the network element #3 receives the first indication information, and broadcasts, to the network element in the network element group based on the first indication information, the data for evaluating the status of the communication between the network element #3 and the network element #2. It may be understood that each network element in the network element group receives the corresponding indication information, and broadcasts, in the network element group based on the corresponding indication information, data for evaluating a status of communication between the network element and the network element #2. The following provides descriptions merely by using an example in which the network element #3 broadcasts the data for evaluating the status of the communication between the network element #3 and the network element #2.

For example, the data for evaluating the status of the communication between the network element #3 and the network element #2 includes error information or warning information recorded by the network element #2 in a process of the communication between the network element #3 and the network element #2. For example, the network element #3 may determine, based on the data that is allowed to be broadcast and that is for evaluating the status of the communication with the network element #2, the data that needs to be broadcast. For details, refer to the related descriptions of the manner A and the manner B. The details are not described herein again.

For example, the error information or the warning information may include exception events enumerated in Table 2.

**Table 2**

| |
|---|
| Exception event |
| Communication delay |
| Connection establishment failure |
| Exception event |
| Returning of an incorrect message |

For updating of the dataset, specifically, refer to the following implementations:

In a possible implementation, if the dataset is stored in each network element in the network element group, the network element #3 stores, in the dataset based on the token for the network element #3, the data for evaluating the status of the communication between the network element #3 and the network element #2. When the network element #3 receives data that is broadcast by another network element in the network element group and that is for evaluating a status of communication between the another network element and the network element #2, the network element #3 stores, in the dataset based on the token for the network element #3, the data for evaluating the status of the communication between the another network element and the network element #2.

For example, the network element #3 broadcasts new data and the identifier of the dataset, and signs the data by using the token for the network element #3. The network element #3 updates (in other words, writes) the data to the dataset corresponding to the identifier of the dataset. After another network element in the network element group receives the data broadcast by the network element #3, the network element that receives the data broadcast by the network element #3 verifies validity of a signature, and updates, after determining that the signature is valid, the data to the dataset corresponding to the identifier of the dataset.

In another possible implementation, if the dataset is stored in the dedicated network element, the network element #3 requests, by using the token for the network element #3, the dedicated network element that stores the dataset to update the dataset.

For example, the network element #3 broadcasts new data. The network element #3 sends a request message to the dedicated network element that stores the dataset corresponding to the identifier of the dataset, where the request message requests to update the data to the dataset corresponding to the identifier of the dataset, and the request message includes the data, the identifier of the dataset, and the token for the network element #3. The dedicated network element that receives the request message verifies validity of the token for the network element #3, and updates, after determining that the token for the network element #3 is valid, the data to the dataset corresponding to the identifier of the dataset.

It may be understood that the data updated to the dataset is data determined by the network elements in the network element group by using the consensus algorithm to be valid. The following uses a voting consensus algorithm that is based on a Byzantine consensus algorithm as an example to describe how to determine that data is valid. It may be understood that a specific solution in which the network elements in the network element group determine valid data by using the consensus algorithm is not limited in this application.

For example, the network element #3 broadcasts new data. The data includes {an identifier of the network element #3, time information, an event, event description information}. The time information is occurrence time of the event broadcast by the network element #3, and the event may be determined based on the error information or warning information recorded by the network element #3 in the process of communication between the network element #3 and the network element #2, as enumerated in Table 2. The event description information is optional, and is for describing specific content of the event. For example, the event is a communication failure, and the event description information is that the network element #3 sends a connection establishment request message to the network element #2, and the network element #3 does not receive a response message from the network element #2 within a specified period of time. Optionally, the data may further include the identifier of the dataset, to identify the dataset into which the broadcast data needs to be written. A network element (the network element B is merely used as an example below) other than the network element #3 in the network element group may verify validity of the identifier of the network element that sends a broadcast message, to be specific, verify whether the network element #3 belongs to the network element group. After verifying that the network element #3 belongs to the network element group, the network element B may determine, based on the time information in the data, an order of the data in stored data. After the end time for writing into the dataset or when the start time for evaluation arrives, the network elements in the network element group may vote on whether the data is valid. When a proportion of network elements in the network element group that consider that the data is valid exceeds a preset proportion, the network elements in the network element group reach a consensus, and determine that the data is valid. That the network elements in the network element group consider that a piece of data is valid means: A network element that sends the piece of data is a network element in the network element group, and the data is sent through a secure connection (for example, a connection having transport layer security (transport layer security, TLS)).

In addition, in a possible implementation, the network element #1 may further send third indication information to a verification network element, where the third indication information indicates the verification network element to perform virtual-layer verification on the network element #2, and update a virtual-layer verification result to the dataset. In other words, the network element #1 may further add the verification network element to the network element group, to evaluate a virtual layer of the network element #2.

For example, the third indication information may include but is not limited to the identifier of the network element in the network element group, the identifier of the network element #2, the identifier of the dataset, a token for the verification network element, and the like. The identifier of the network element in the network element group is for verifying whether a network element that performs broadcasting belongs to the network element group. The identifier of the network element #2 indicates the evaluated network element. In this case, the dataset further includes the virtual-layer verification result for the network element #2, and the token for the verification network element authorizes the verification network element to update the dataset.

For example, the verification network element interacts with an attester, to perform remote attestation on the network element #2, and obtain the virtual-layer verification result for the network element #2. It should be noted that content on which the remote attestation needs to be performed may include but is not limited to at least one of the following content: a virtualization layer VNF corresponding to the network element #2, an operating system corresponding to the network element #2, or hardware corresponding to the network element #2.

The attester may also be referred to as a remote attestation attester (remote attestation-Attester, RA-Attester). For example, the attester is not a network element but a function outside an SBA. Only the verification network element can interact with the attester, and the attester is for attesting security of a virtual machine group to which an NF (for example, the network element #2) belongs and a virtual layer, for example, a VNF. For example, integrity measurement is performed on a target system of an NF to be attested (for example, a target system of the network element #2), and a set of statements referred to as evidence (Evidence) are generated (for example, the evidence may include the hash value in step 2 shown in FIG. 2). The verification network element may also be referred to as a remote attestation verifier (remote attestation-verifier, RA-Verifier) or a verifier. For example, the verifier is a network element, and is for verifying evidence of an NF (for example, the network element #2), for example, comparing the evidence with pre-configuration information, to obtain a virtual-layer verification result (for example, the evidence is valid or is invalid). A specific verification manner is not limited in this application. The verification may be performed locally based on a pre-configuration, or may be performed on a remote server. This is not limited in this application.

It may be understood that the virtual-layer verification result updated to the dataset is a virtual-layer verification result determined by the network elements in the network element group by using the consensus algorithm to be valid.

Step 530: The network element #1 determines, based on data for evaluating a status of communication between the network element #2 and one or more network elements that have communicated with the network element #2, whether to access the network element #2. The one or more network elements that have communicated with the network element #2 include the network element #3 and the at least one network element.

In a possible implementation, the network element #1 may determine, based on the dataset, whether to access the network element #2. For example, if the network element #1 belongs to the network element group, and the dataset is stored in the network element #1, the network element #1 may directly determine, based on the dataset, whether to access the network element #2. If the network element #1 belongs to the network element group, and the dataset is stored in the dedicated network element, the network element #1 may obtain the dataset from the dedicated network element based on the identifier of the dataset and a token for the network element #1, and determine, based on the dataset, whether to access the network element #2. The token for the network element #1 authorizes the network element #1 to obtain the dataset.

For example, solutions to determining, by the network element #1 based on the dataset, whether to access the network element #2 include but are not limited to the following solutions:

Solution 1: The network element #1 may calculate, based on a correspondence that is between an exception event and a score and that is pre-configured by the operator and an exception event stored in the dataset, a total score that is of the exception event and that corresponds to the dataset. When the total score of the exception event is greater than a preset threshold, the network element #1 determines that the network element #2 is an abnormal network element or an untrusted network element, or determines not to access the network element #2. When the total score of the exception event is less than or equal to the preset threshold, the network element #1 determines that the network element #2 is a normal network element or a trusted network element, or determines that the network element #2 is capable of being accessed. For example, Table 3 enumerates the correspondence between the exception event and the score. It may be understood that, due to factors such as that network element types of different network elements may be different, and slice information of different network elements may also be different, scores configured by different network elements for a same exception event may be different. For example, for the network element A and the network element B, a correspondence that is between an exception event and a score and that corresponds to the network element A is usually different from a correspondence that is between an exception event and a score and that corresponds to the network element B. In other words, for a same exception event, a score configured by the network element A for the exception event may be different from a score configured by the network element B for the exception event.

Similarly, when the network element group includes the verification network element, the dataset further includes a plurality of virtual-layer verification results. The network element #1 may calculate, based on a correspondence that is between a virtual-layer verification result and a score and that is pre-configured by the operator and the virtual-layer verification results stored in the dataset, a total score that is of the virtual-layer verification result and that corresponds to the dataset. When a statistical result of the total score of the exception event and the total score of the virtual-layer verification result is greater than a preset threshold, the network element #1 determines not to access the network element #2. When the statistical result of the total score of the exception event and the total score of the virtual-layer verification result is less than or equal to the preset threshold, the network element #1 determines that the network element #2 is capable of being accessed. The statistical result of the total score of the exception event and the total score of the virtual-layer verification result may be a weighted sum, an average value, or the like of a statistical result of the total score of the exception event and a statistical result of the total score of the virtual-layer verification result. This is not limited in this application.

**Table 3**

| Exception event | Score |
|---|---|
| Communication delay | 1 |
| Connection establishment failure | 2 |
| Returning of an incorrect message | 10 |
| ... | ... |

Solution 2: The network elements in the network element group may separately calculate, based on a correspondence that is between an exception event and a score and that is pre-configured by the operator and an exception event stored in the dataset, a total score that is of the exception event and that corresponds to the dataset. The network element in the network element group may compare a total score that is of the exception event and that is calculated by the network element with a preset threshold, and determine and broadcast a determining result. When a proportion of determining results indicating that the network element #2 is an abnormal network element exceeds a preset proportion, the network element #1 determines that the network element #2 is the abnormal network element or an untrusted network element, or determines not to access the network element #2. When the proportion of determining results indicating that the network element #2 is an abnormal network element does not exceed the preset proportion, the network element #1 determines that the network element #2 is a normal network element or a trusted network element, or determines that the network element #2 is capable of being accessed. In the solution 2, the network elements in the network element group may include the network element #1, or may not include the network element #1. This is not limited in this application. In addition, when the network element group includes the verification network element, the determining result may alternatively be determined with reference to a total score that is of the virtual-layer verification result and that is calculated by each network element. This is similar to the solution 1, and details are not described herein again.

For example, the network element group includes the network element A, the network element B, and the network element #1. A correspondence that is between an exception event and a score and that corresponds to the network element A, a correspondence that is between an exception event and a score and that corresponds to the network element B, and a correspondence that is between an exception event and a score and that corresponds to the network element #1 are usually different from each other. Therefore, for an exception event stored in the dataset, a total score of the exception event that is calculated by the network element A and that corresponds to the dataset, a total score of the exception event that is calculated by the network element B and that corresponds to the dataset, and a total score of the exception event that is calculated by the network element #1 and that corresponds to the dataset are usually different. Further, the network element A, the network element B, and the network element #1 each compare the calculated total score that is of the exception event and that corresponds to the dataset with a preset threshold, and determine and broadcast a determining result. If two of the three network elements determine that the network element #2 is an abnormal network element, the network element #1 determines not to access the network element #2.

Further, in a possible design, when the network element #1 determines, based on the dataset, to access the network element #2, the network element #1 stores a first event in the dataset based on the token for the network element #1, where the first event indicates that the network element #1 accesses the network element #2. When the network element #1 determines, based on the dataset, not to access the network element #2, the network element #1 stores a second event in the dataset based on the token for the network element #1, and the second event indicates that the network element #1 does not access the network element #2. The token for the network element #1 authorizes the network element #1 to update the dataset.

In addition, in a possible implementation, when the network element #1 determines, based on the dataset, not to access the network element #2, and the network element #1 has established a connection to the network element #2, the network element #1 may send a reselection request message to the network repository function network element, where the reselection request message is used to request to reselect a network element of the same network element type as the network element #2. For example, the reselection request message may include the identifier of the network element #2, to indicate the network repository function network element to shield the network element #2 when reselecting the network element of the same network element type as the network element #2 for the network element #1, in other words, not to select the network element #2. Further, the network repository function network element may send a reselection response message to the network element #1, where the reselection response message includes an identifier of a network element reselected for the network element #1.

In a possible implementation, when the network element #1 determines, based on the dataset, not to perform access, the network element #1 may send a registration cancelation request message to the network repository function network element, where the registration cancelation request message includes the identifier of the network element #2. The network repository function network element may notify that the network element #2 is deregistered, to be specific, another network element can no longer discover the network element #2.

It may be understood that step 530 is applicable to the scenario in which the possible implementation of the network element #1 is the manner 1 (in other words, the evaluation on whether the network element #2 is capable of being accessed is triggered by the network element #1), and is also applicable to a scenario in which when the possible implementation of the network element #1 is the manner 2 (in other words, the evaluation on whether the network element #2 is capable of being accessed is triggered by the network element other than the network element #1), the network element #1 determines, for the network element that needs to establish the communication connection to the network element #2, whether to access the network element #2.

In addition, when the possible implementation of the network element #1 is the manner 2 (in other words, the evaluation on whether the network element #2 is capable of being accessed is triggered by the network element other than the network element #1), the network element that needs to establish the communication connection to the network element #2 may alternatively determine whether to access the network element #2.

In an example, if the network element that is obtained by the network element #1 and that has communicated with the network element #2 includes the network element (referred to as a network element X for short below) that needs to establish the communication connection to the network element #2, the network element X may be a network element in the network element group, and the network element X may determine, based on the dataset, whether to access the network element #2.

In another example, if the network element that is obtained by the network element #1 and that has communicated with the network element #2 does not include the network element X, the network element #1 may send second indication information to the network element X, where the second indication information indicates the network element X to determine, based on the dataset, whether to access the network element #2. For example, there may be a plurality of network repository function network elements, and the network element #1 may not obtain, from a network repository function network element that has communicated with the network element X, the information about the network element that has communicated with the network element #2. In this case, the network element group does not include the network element X. For example, the second indication information may be in an explicit indication manner or an implicit indication manner. The second indication information may include but is not limited to the identifier of the network element in the network element group, the identifier of the dataset, and a token for the network element X. The token for the network element X authorizes the network element X to obtain and update the dataset. In other words, the network element #1 may add the network element X to the network element group.

It may be understood that, for the foregoing two examples, when the network element X determines, based on the dataset, whether to access the network element #2, specifically refer to the foregoing solution 1 and solution 2. Similarly, after the network element X determines, based on the dataset, whether to access the network element #2, the network element X may further update a first event or a second event to the dataset.

According to the foregoing embodiment, whether the network element #2 is capable of being accessed can be evaluated, and the network element #2 is evaluated with reference to data for evaluating a status of communication between the network element #2 and another network element that has communicated with the network element #2, to implement multi-dimensional evaluation on the network element #2.

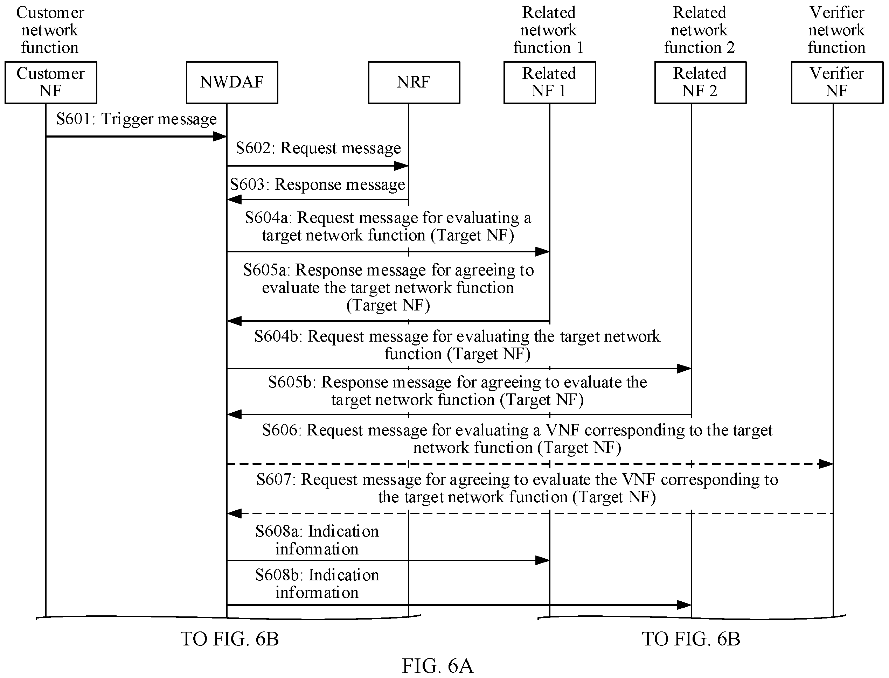

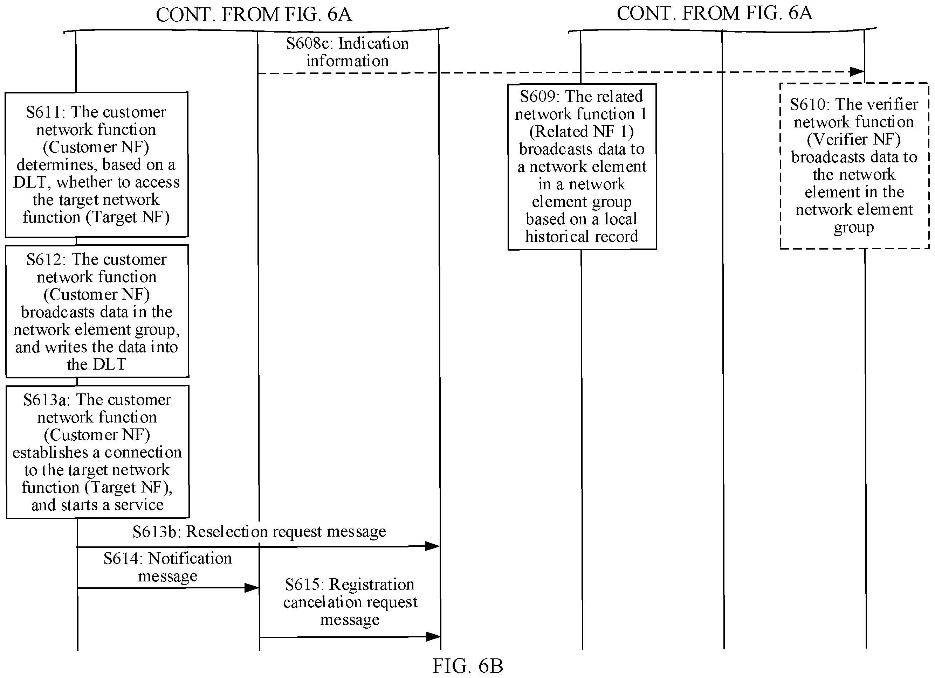

The embodiment shown in FIG. 5 is specifically described below with reference to FIG. 6A and FIG. 6B.

S601: A customer NF sends a trigger message to an NWDAF. The trigger message is for triggering evaluation on whether a target NF is capable of being accessed. The trigger message may include a target NF ID. Optionally, the trigger message may further include a service type that triggers the evaluation, and the service type that triggers the evaluation is a service type of communication between the customer NF and the target NF.

In addition, the trigger message may further include a target NF type. It may be understood that, in a scenario in which the target NF cannot be uniquely determined by using the target NF ID, the target NF needs to be uniquely determined by using the target NF type and the target NF ID. If the target NF can be uniquely determined by using the target NF ID, the target NF type does not need to be sent when the target NF ID is sent. In the following, in a scenario in which an NF cannot be uniquely determined by using an NF ID, both the NF ID and an NF type need to be sent. Details are not described again.

S602: The NWDAF sends a request message to an NRF. The request message requests a historical record for a network element that has initiated a connection to the target NF on the NRF. The request message includes the target NF ID.

S603: The NRF sends a response message to the NWDAF. The response message includes at least one related (Related) NF ID, and at least one related (Related) NF is the network element that has initiated the connection to the target NF on the NRF. For example, the response message includes a list of related NF IDs.

S604a: The NWDAF sends, to a related NF 1, a request message for evaluating the target NF.

S604b: The NWDAF sends, to a related NF 2, a request message for evaluating the target NF.

The related NF 1 and the related NF 2 belong to the at least one related NF. The request message for evaluating the target NF requests to evaluate whether the target NF is capable of being accessed, and includes the target NF ID and the at least one related NF ID. For example, the request message for evaluating the target NF may also be understood as a request message for joining a network element group.

It may be understood that the NWDAF may further send, to another related NF, a request message for evaluating the target NF. Herein, the sending of the request message to the related NF 1 and the related NF 2 is merely an example and is not intended to limit this application.

The target NF ID indicates a specific NF to be evaluated, and the at least one related NF ID notifies an NF that may be included in the network element group.

It may be understood that when communication with a related NF cannot be performed by using a related NF ID, the NWDAF further needs to send an address of the related NF. If the NF cannot be uniquely determined by using the address of the related NF and the related NF ID, a related NF type further needs to be sent as a supplement. Alternatively, an NF that receives the related NF ID may further query the address of the related NF based on the related NF ID or based on the related NF ID and the related NF type.

In the following, in a scenario in which communication with an NF cannot be performed by using an NF ID, an address of the NF may be further sent. If the NF cannot be uniquely determined by using the address of the NF and the NF ID, an NF type may be further sent as a supplement.

In addition, the NWDAF may further generate an evaluation rule for the target NF based on the service type that triggers authentication in step 1 and a pre-configuration rule or an operator rule. The evaluation rule may notify data that is allowed, by an NF that joins the network element group, to be broadcast. Optionally, the evaluation rule may be carried in the request message in step 4. Alternatively, the evaluation rule may be carried in indication information in step 9. This is not limited in this application.

S605a: The related NF 1 sends, to the NWDAF, a response message for agreeing to evaluate the target NF, where the response message for agreeing to evaluate the target NF includes a related NF1 ID.

S605b: The related NF 2 sends, to the NWDAF, a response message for agreeing to evaluate the target NF, where the response message for agreeing to evaluate the target NF includes a related NF2 ID.

For example, the response message for agreeing to evaluate the target NF may also be understood as a response message for agreeing to join the network element group. It may be understood that all or a part of the at least one related NF may send, to the NWDAF, the response message for agreeing to evaluate the target NF.

S606: Optionally, the NWDAF sends, to a verifier NF, a request message for evaluating a VNF corresponding to the target NF. The request message for evaluating the VNF corresponding to the target NF includes the target NF ID and the at least one related NF ID. In addition, the request message for evaluating the VNF corresponding to the target NF may further include an attestation rule, and the attestation rule indicates to perform remote attestation on at least one of the following that the target NF is associated with: a virtualization layer VNF, an operating system, or hardware.

It may be understood that S606 may also be understood as inviting the verifier NF to the network element group.

S607: Optionally, the verifier NF sends, to the NWDAF, a request message for agreeing to evaluate the VNF corresponding to the target NF.

S608a: The NWDAF sends indication information to the related NF 1.

S608b: The NWDAF sends indication information to the related NF 2.

S608c: Optionally, the NWDAF sends indication information to the verifier NF.

For example, the NWDAF determines, based on the received response messages (for example, in S605 and S607), NFs included in the network element group, where the NFs may also be referred to as participant NFs or NFs participating in the evaluation on the target NF. The NWDAF separately sends the corresponding indication information to the NFs in the network element group. For example, both the related NF 1 and the related NF 2 send, to the NWDAF, the response message for agreeing to evaluate the target NF (corresponding to S605), and the verifier NF sends, to the NWDAF, the request message for agreeing to evaluate the VNF corresponding to the target NF (corresponding to S607). The NWDAF determines, based on the foregoing messages, that the network element group includes the related NF 1, the related NF 2, and the verifier NF. The NWDAF separately sends the corresponding indication information to the related NF 1, the related NF 2, and the verifier NF.

For any NF in the network element group, the indication information sent by the NWDAF to the NF includes participant NF IDs, a DLT ID, and a token dedicated to the NF. Optionally, the indication information may further include end time for writing into a DLT or start time for evaluation. For example, the indication information sent by the NWDAF to the related NF 1 includes the related NF1 ID, the related NF2 ID, a verifier NF ID, the DLT ID, and a token for the related NF 1.

For example, the NWDAF establishes a new DLT, and the DLT may be a permissioned DLT. Specifically, the NWDAF may allocate a new DLT ID for evaluating the target NF, where the DLT ID is a unique identifier in an entire network. It may be understood that the NWDAF may establish the DLT after S603 or S607. This is not limited in this application. In addition, when the DLT is currently stored in a dedicated network element, the NWDAF further needs to determine an address corresponding to the DLT ID, namely, an address of the network element that stores the DLT. In this case, the indication information further includes the address corresponding to the DLT ID.

In the following, if the DLT is locally stored in each NF in the network element group, the indication information needs to include only the DLT ID. If the DLT is stored in the dedicated network element, the indication information needs to include only the DLT ID and the address corresponding to the DLT ID, to notify the NF that receives the indication information of an address for writing broadcast data. In this case, a DLT copy does not need to be stored in each network element, to reduce network overheads.

S609: The related NF 1 broadcasts data to the network element in the network element group based on a local historical record, where the data includes error information or warning information recorded by the related NF 1 in a process of the communication between the related NF 1 and the target NF.

In addition, if the DLT is locally stored in each NF in the network element group, when it is determined, by using a consensus algorithm, that the broadcast data is valid, the related NF 1 writes the broadcast data into the DLT based on the token for the related NF 1. For specific formats of the consensus algorithm and the data broadcast by the related NF 1, refer to the foregoing possible implementation of updating the dataset. Details are not described herein again.

The related NF 2 is similar to the related NF 1, and details are not described herein again.

S610: Optionally, the verifier NF broadcasts data to the network element in the network element group. The data includes an attestation result.

For example, the verifier NF attests the target NF through an attester, and the attester returns evidence. Each time after receiving the evidence, the verifier NF verifies the evidence, and stores the attestation result, namely, verified evidence, that is, a virtual-layer verification result.

For example, the data includes {the verifier NF ID, attestation time, the current attestation result, an optional attestation description (for example, a digital signature of the attester or an attester ID)}. When it is determined, by using the consensus algorithm, that the broadcast data is valid, the verifier NF writes the broadcast data into the DLT based on a token for the verifier NF.

In addition, if the DLT is stored in the dedicated network element, when it is determined, by using the consensus algorithm, that the broadcast data is valid, the dedicated network element that stores the DLT writes the broadcast data into the DLT. For example, the dedicated network element that stores the DLT may be the NWDAF.

S611: The customer NF determines, based on the DLT, whether to access the target NF.

For example, the NWDAF may alternatively send indication information to the customer NF, in other words, invite the customer NF to join the network element group, so that the customer NF receives data broadcast by the network element in the network element group. For example, the customer NF may locally store the DLT in the customer NF, or learns of an identifier of the network element that stores the DLT. Further, the customer NF may determine, based on the DLT by using the solution 1 in step 530, whether to access the target NF. It may be understood that whether to access the target NF may alternatively be determined by another network element or by using another solution. Details are not described herein. Specifically, refer to the solution 1 and the solution 2 in step 530.

S612: The customer NF broadcasts data in the network element group, and writes the data into the DLT.

For example, the data includes {a customer NF ID, time, an event, event description information (optional)}. The time may be time for writing the data, and the event may indicate that the customer NF accesses the target NF, or the customer NF does not access the target NF. The event description information may indicate a total score of an exception event that is calculated by the customer NF and that corresponds to the DLT, and the like. For the total score of the exception event, refer to the related descriptions in the solution 1 in step 530.

S613a: When the customer NF determines to access the target NF, the customer NF establishes a connection to the target NF, and starts a service.

The procedure ends.

S613b: When the customer NF determines to access the target NF and the target NF has conducted the service with the customer NF, the customer NF sends a reselection request message to the NRF.

For example, the reselection request message is used to request to reselect a network element of a same network element type as the target NF. For example, the reselection request message may include the target NF ID, to indicate the NRF to shield the target NF when reselecting the network element of the same network element type as the target NF for the customer NF.

S614: The customer NF sends a notification message to the NWDAF, where the notification message indicates that the customer NF determines not to access the target NF, and the notification message may further include a cause value for determining, by the customer NF, not to access the target NF. For example, the cause value is an event with a high proportion in the DLT.

S615: The NWDAF sends a registration cancelation request message to the NRF based on the notification message and local policy record information, where the registration cancelation request message includes the target NF ID. Further, the NRF may notify that the target NF is deregistered, in other words, another NF can no longer discover the target NF.

The procedure ends.

It can be learned that, according to the embodiment in FIG. 6A and FIG. 6B, whether the target NF is capable of being accessed can be evaluated, in other words, the target NF is evaluated in multiple dimensions. The customer NF may determine, based on the DLT for evaluating the target NF, whether to access the target NF.

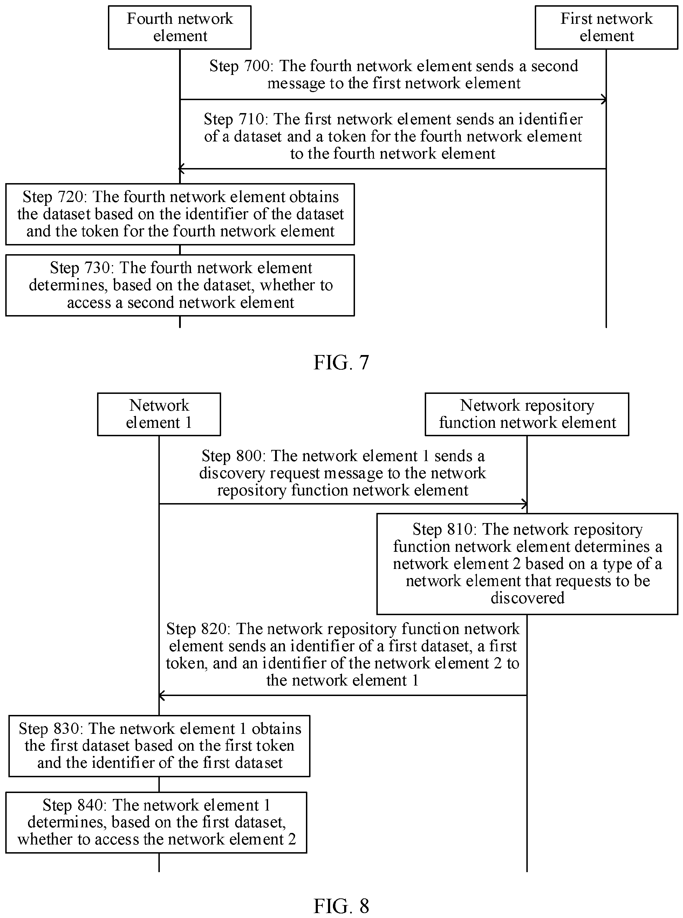

An embodiment of this application further provides a communication method. As shown in FIG. 7, the method includes the following steps.

Step 700: A network element #4 sends a second message to a network element #1, where the second message is for triggering evaluation on whether a network element #2 is capable of being accessed.

The network element #1 may be a network element that has functions of storing an identifier of a dataset and allocating a token or a network element that has functions of obtaining an identifier of a dataset and allocating a token. For example, the network element #1 may be a network element having an analytics function, or may be referred to as an analytics network element. For example, the network element #1 may be an NWDAF network element. Alternatively, the network element #1 may be a network element co-located with another network element that has an analytics function.

The network element #4 may be a network element that needs to establish a communication connection to the network element #2. The second message is similar to the first message in the embodiment shown in FIG. 5. Correspondingly, the network element #4 may initiate the second message in any one of the scenarios 1 to 4 in step 500. Details are not described herein again. For example, the network element #4 may send the second message to the network element #1 in any one of the scenarios 1 to 4 in step 500, where the second message is for triggering the evaluation on whether the network element #2 is capable of being accessed. The second message may include an identifier of the network element #2. Optionally, the second message may further include a type of the network element #2 and/or a service type of communication between the network element #4 and the network element #2.

The network element #2 may be referred to as an evaluated network element or a to-be-evaluated network element, or may be referred to as a target network element.

Step 710: The network element #1 sends the identifier of the dataset and a token for the network element #4 to the network element #4, where the token for the network element #4 authorizes the network element #4 to obtain the dataset. The identifier of the dataset is for obtaining the dataset.

The dataset includes data for evaluating a status of communication between a network element in a network element group and the network element #2. The token for the network element #4 authorizes the network element #4 to update the dataset. For related descriptions of the dataset and the token, refer to the related content in the embodiment shown in FIG. 5.

In addition, the network element #1 may further send, to the network element #4, an identifier of a network element that stores the dataset. For example, if the dataset is stored in each network element in the network element group, the identifier of the network element that stores the dataset may include an identifier of at least one network element in the network element group. If the dataset is stored in a dedicated network element (namely, a dataset storage node), the identifier of the network element that stores the dataset may be an identifier of the dedicated network element that stores the dataset.

The following describes several possible scenarios of step 710.

Scenario 1: The network element #1 may maintain a correspondence between an identifier of an evaluated network element and an identifier of a dataset. If the network element #1 determines, based on the identifier of the network element #2, that the dataset for evaluating the network element #2 is stored, the network element #1 may directly send the dataset and the token for the network element #4 to the network element #4.

Scenario 2: The network element #1 may maintain a correspondence between an identifier of an evaluated network element and an identifier of a dataset. If the network element #1 determines, based on the identifier of the network element #2, that the identifier of the dataset for evaluating the network element #2 is stored, the network element #1 sends the identifier of the dataset and the token for the network element #4 to the network element #4. Optionally, the network element #1 may further send, to the network element #4, the identifier of the network element that stores the dataset. For example, if the network element #1 has performed the embodiment shown in FIG. 5, the network element #1 stores the identifier of the dataset for evaluating whether the second access is capable of being accessed.

Scenario 3: If the network element #1 determines, based on the identifier of the network element #2, that the identifier of the dataset for evaluating the network element #2 is not stored, the network element #1 may obtain, from another network element, the identifier of the dataset for evaluating the network element #2, and generate a fourth token. The network element #1 sends the identifier of the dataset and the token for the network element #4 to the network element #4.

For example, the network element #1 may obtain, from a network repository function network element, information about a network element that has communicated with the network element #2. For details, refer to step 500. The network element #1 may send a request message to one or more network elements in the network element that has communicated with the network element #2. The request message requests the identifier of the dataset for evaluating the network element #2. For example, the request message includes the identifier of the network element #2. Specifically, the following two sub-scenarios may be included:

Sub-scenario 1: If a network element that receives the request message queries, based on the identifier of the network element #2, a locally maintained correspondence between an identifier of an evaluated network element and an identifier of a dataset, and determines that the dataset for evaluating the network element #2 is stored, the network element may send the identifier of the dataset to the network element #1. Optionally, the network element may send, to the network element #1, the identifier of the network element that stores the dataset (namely, an identifier of the network element).

Sub-scenario 2: If a network element that receives the request message queries, based on the identifier of the network element #2, a locally maintained correspondence between an identifier of an evaluated network element and an identifier of a dataset, and determines that the identifier of the dataset for evaluating the network element #2 is stored but the dataset is not stored, the network element may send the identifier of the dataset to the network element #1. Optionally, the network element may send, to the network element #1, the identifier of the network element that stores the dataset.

In addition, if the network element #4 fails to obtain the identifier of the dataset and the token for the network element #4 from the network element #1, the network element #1 may perform the embodiment shown in FIG. 5.

Step 720: The network element #4 obtains the dataset based on the identifier of the dataset and the token for the network element #4.

In an example, if the dataset is stored in the dedicated network element, the network element #4 may pre-configure the identifier of the dedicated network element, namely, the identifier of the network element that stores the dataset.

In another example, the network element #1 sends, to the network element #4, the identifier of the network element that stores the dataset.

Further, the network element #4 may send a request message to the network element that stores the dataset, where the request message may include the identifier of the dataset and the token for the network element #4. The network element that stores the dataset determines, based on the token for the network element #4, that the request message is valid, and sends the dataset to the network element #4. Alternatively, the network element #4 may send a request message to the network element that stores the dataset, where the request message may include the identifier of the dataset and signature information generated by using the token for the network element #4. The network element that stores the dataset determines, based on the signature information generated by using the token for the network element #4, that the request message is valid, and sends the dataset to the network element #4.

Therefore, the dataset may be shared by another network element (namely, the network element #4) that may communicate with the network element #2, to reduce overheads for re-evaluating the network element #2.

Step 730: The network element #4 determines, based on the dataset, whether to access the network element #2.

In an example, the network element #4 may determine, based on a quantity of events that the network element #2 is accessed and/or a quantity of events that the network element #2 is not accessed that are/is recorded in the dataset, whether to access the network element #2. For example, when determining that the quantity of events that the network element #2 is accessed in the dataset is greater than a preset quantity, the network element #4 determines to access the network element #2. Alternatively, when determining that the quantity of events that the network element #2 is accessed in the dataset is greater than a preset quantity and the quantity of events that the network element #2 is not accessed is less than a second preset quantity, the network element #4 determines to access the network element #2.

In another example, the network element #4 may determine, by using the solution 1 and the solution 2 in step 530, whether to access the network element #2. Details are not described herein again.

Similarly, after the network element #4 determines, based on the dataset, whether to access the network element #2, the network element #4 may further update a first event or a second event to the dataset. In this case, the token for the network element #4 authorizes the network element #4 the to update the dataset.

In addition, the network element #4 may further trigger, based on the dataset, evaluation on whether another network element in the network element group is capable of being accessed.

According to the foregoing embodiment, the network element #1 receives the second message from the network element #4, and determines that the network element group corresponding to the network element #2 and the dataset corresponding to the network element #2 have been created. In this case, the network element #1 may send, to the network element #4, the identifier of the dataset corresponding to the network element #2 and the token for the network element #4, to reduce the overheads for re-evaluating the network element #2.

Currently, the network element #1 may send a discovery request message to the network repository function network element, where the discovery request message includes a type of a network element that requests to be discovered. The network repository function network element may send an identifier of one or more network elements of the network element type to the network element #1. Further, the network element #1 may select, from the one or more network elements of the network element type, a network element to which a communication connection is to be established. A plurality of factors may be considered when the network element #1 selects the network element to which the communication connection is to be established.

For example, according to descriptions in 3GPP TS 23.501, using an example in which an AMF selects an SMF, the following factors may be considered for the selection of the SMF: a selected data network name (data network name, DNN), where when a terminal is roaming, a V-SMF chooses not to use the DNN; single network slice selection assistance information (single network slice selection assistance information, S-NSSAI) of a home public land mobile network (home public land mobile network, HPLMN) (used in non-roaming and home-routed roaming scenarios) and S-NSSAI of a visited public land mobile network (visited public land mobile network, VPLMN) (used in local breakout roaming and home-routed roaming scenarios); slice selection related information; an access technology being used by the terminal device; support for cellular internet of things (cellular internet of things, CIoT) 5G system (5G system, 5GS) optimization; subscription information from a unified data management (unified data management, UDM) network element; a local operator policy, where for example, the policy herein may be for considering whether the SMF to be selected is an I-SMF, a V-SMF, or an SMF; a load condition of a candidate SMF, where if the NWDAF is deployed, analysis (namely, statistics collection or prediction) is performed on load of the candidate SMF received from the NWDAF (refer to TS 23.288); a UE location (namely, a TA); a service area of the candidate SMF; a capability of the SMF to support a multi-access PDU session; a preference that is supported by the SMF and that may be further included if interworking with EPS is needed, where this is only applicable to a scenario of V-SMF selection in home-routed roaming; and a target data network access identity.

With reference to the embodiments shown in FIG. 5, FIG. 6A and FIG. 6B, and FIG. 7, if the to-be-selected SMF has a corresponding dataset, the AMF may further take the dataset into consideration.

Based on this, an embodiment of this application provides a communication method. As shown in FIG. 8, the method includes the following steps.

Step 800: A network element 1 sends a discovery request message to a network repository function network element, where the discovery request message includes a type of a network element that requests to be discovered.

For example, the discovery request message may be an NF discovery request (Nnrf_NFDicovery_Request) message.

Step 810: The network repository function network element determines a network element 2 based on the type of the network element that requests to be discovered.

For example, the network repository function network element may select the matched network element 2 according to an NF selection rule.

Step 820: The network repository function network element sends an identifier of a first dataset, a first token, and an identifier of the network element 2 to the network element 1, where the identifier of the first dataset is for obtaining the first dataset, the first dataset includes data for evaluating a status of communication between the network element 2 and another network element, and the first token authorizes the network element 1 to obtain the first dataset.

For example, the identifier of the first dataset, the first token, and the identifier of the network element 2 may be carried in a discovery response (Nnrf_NFDicovery_Response) message.

For example, the network repository function network element may further send, to the network element 1, an identifier of a network element that stores the first dataset. If the first dataset is stored in each network element in a network element group, the identifier of the network element that stores the first dataset may include an identifier of at least one network element in the network element group. If the first dataset is stored in a dedicated network element, the identifier of the network element that stores the first dataset may be an identifier of the dedicated network element that stores the first dataset.

Step 820 may specifically include the following cases:
Case A: If the network repository function network element stores the first dataset, the network repository function network element may directly send the first dataset, the first token, and the identifier of the network element 2 to the network element 1. In this case, the first token authorizes the network element 1 to update the first dataset.

For example, after the network repository function network element determines the network element 2, the network repository function network element may query a historical record of the network repository function network element based on the identifier of the network element 2, to determine whether the identifier of the first dataset is stored. For example, the historical record of the network repository function network element is a correspondence that is between an identifier of an evaluated network element and an identifier of a dataset and that is maintained by the network repository function network element. The first dataset herein is also a dataset for evaluating the network element 2.

Case B: If the network repository function network element does not store the first dataset but stores only the identifier of the first dataset, the network repository function network element sends the identifier of the first dataset, the first token, and the identifier of the network element 2 to the network element 1. Optionally, the network repository function network element further sends, to the network element 1, the identifier of the network element that stores the first dataset.

Case C: If the network repository function network element does not store the identifier of the first dataset, the network repository function network element may obtain the identifier of the first dataset or the first dataset from another network element. The network repository function network element sends the identifier of the first dataset or the first dataset, the first token, and the identifier of the network element 2 to the network element 1. The first token may be obtained from another network element or generated by the network repository function network element. This is not limited in this application.

For example, the network repository function network element sends a dataset query request message to a network element 3. The dataset query request message may be understood as requesting an evaluation result for the network element 2 or requesting the dataset for evaluating the network element 2. The dataset query request message includes the identifier of the network element 2. Similarly, the network element 3 queries a historical record of the network element 3 based on the identifier of the network element 2. For example, the historical record of the network element 3 is a correspondence that is between an identifier of an evaluated network element and an identifier of a dataset and that is maintained by the network element 3. The network element 3 may be a network element that has functions of storing an identifier of a dataset and allocating a token. For example, the network element 3 may be a network element having an analytics function, or may be referred to as an analytics network element. For example, the network element 3 may be an NWDAF network element. Alternatively, the network element 3 may be a network element co-located with another network element that has an analytics function.

The case C specifically includes the following two possible sub-cases:
Sub-case C1: If the network element 3 stores the first dataset, the network element 3 sends the first dataset to the network repository function network element. Optionally, the network element 3 sends the first token to the network repository function network element.

Sub-case C2: If the network element 3 stores only the identifier of the first dataset but does not store the first dataset, the network element 3 sends the identifier of the first dataset to the network repository function network element. Optionally, the network element 3 sends, to the network repository function network element, the first token and/or the identifier of the network element that stores the first dataset.

The data for evaluating the status of the communication between the another network element and the network element 2 includes error information or warning information recorded by the another network element in a process of the communication between the another network element and the network element 2. For details, refer to the related descriptions in step 520. The details are not described herein again.

When the network repository function network element obtains the first token from the network element 3, the dataset query request message may include an identifier of the network element 1, and the network element 3 may determine the first token based on the identifier of the network element 1.

It may be understood that the network repository function network element may determine a plurality of network elements based on the type of the network element that requests to be discovered. For example, the network repository function network element may further determine a network element 4 based on the type of the network element that requests to be discovered, so that the network repository function network element may send an identifier of a second dataset, a second token, and an identifier of the network element 4 to the network element 1. In addition, the network repository function network element may send, to the network element 1, an identifier of a network element that stores the second dataset. The identifier of the second dataset is for obtaining the second dataset, the second dataset includes data for evaluating a status of communication between the network element 4 and another network element, and the second token authorizes the network element 1 to obtain the second dataset. It may be understood that the foregoing content and the content sent by the network repository function network element in step 820 may be sent simultaneously or separately. This is not limited in this application.

In addition, in a possible implementation, the discovery request message further includes first indication information, and the first indication information indicates that a network element that performs network element discovery this time is an evaluated network element. The evaluated network element may be understood as having a dataset for evaluating the network element, in other words, having a dataset for evaluating whether the network element is capable of being accessed. In this case, the network repository function network element determines that the network element 2 is a network element of the type of the network element that requests to be discovered, and further needs to determine whether there is the dataset for evaluating the network element 2, in other words, whether there is the first dataset. If there is the dataset, step 820 is performed.

For example, the network repository function network element may determine a network element A, a network element B, and a network element C based on the type of the network element that requests to be discovered. If the network repository function network element obtains identifiers of datasets respectively corresponding to two network elements (for example, the network element A and the network element B) in the network elements and corresponding tokens, the network repository function network element may send, to the network element 1, the identifier of the dataset corresponding to the network element A, the token for the dataset corresponding to the network element A, an identifier of the network element A, the identifier of the dataset corresponding to the network element B, the token for the dataset corresponding to the network element B, and an identifier of the network element B.

In a possible implementation, the discovery request message further includes second indication information, and the second indication information indicates to feed back an evaluation result for the network element discovered this time (or indicates that the network element 1 needs to evaluate the discovered network element). For example, the evaluation result for the network element discovered this time includes an identifier of a dataset for evaluating the network element discovered this time and a token corresponding to the dataset. In other words, when the network element discovered this time is the network element 2, the evaluation result includes the identifier of the first dataset and the first token. In this case, the network element 1 may explicitly request the network repository function network element to provide the identifier of the dataset for evaluating the network element discovered this time and the token corresponding to the dataset.

It may be understood that, if there is the evaluation result for the network element discovered this time, the network repository function network element may feed back the evaluation result for the network element; or if there is no evaluation result for the network element discovered this time, the network repository function network element may send only an identifier of the network element discovered this time. Alternatively, if there is the evaluation result for the network element discovered this time, the network repository function network element may feed back the evaluation result for the network element; or if there is no evaluation result for the network element discovered this time, the network repository function network element may not send an identifier of the network element discovered this time.

For example, the network repository function network element may determine a network element A, a network element B, and a network element C based on the type of the network element that requests to be discovered. If the network repository function network element obtains identifiers of datasets respectively corresponding to two network elements (for example, the network element A and the network element B) in the network elements and corresponding tokens, the network repository function network element may send, to the network element 1, the identifier of the dataset corresponding to the network element A, the token for the dataset corresponding to the network element A, an identifier of the network element A, the identifier of the dataset corresponding to the network element B, the token for the dataset corresponding to the network element B, an identifier of the network element B, and an identifier of the network element C.

Step 830: The network element 1 obtains the first dataset based on the first token and the identifier of the first dataset.

For example, if the network element 1 stores the first dataset, the network element 1 may obtain the first dataset based on the identifier of the first dataset.

If the network element 1 does not store the first dataset, for details about obtaining the first dataset by the network element 1, refer to step 720.

Therefore, the first dataset may be shared by another network element (namely, the network element 1) that may communicate with the network element 2, so that the network element 1 can select an appropriate network element for communication.

Step 840: The network element 1 determines, based on the first dataset, whether to access the network element 2.

In an example, the network element 1 may determine, based on a quantity of events that the network element 2 is accessed and/or a quantity of events that the network element 2 is not accessed that are/is recorded in the first dataset, whether to access the network element 2. For example, when determining that the quantity of events that the network element 2 is accessed in the first dataset is greater than a preset quantity, the network element 1 determines to access the network element 2. Alternatively, when determining that the quantity of events that the network element 2 is accessed in the first dataset is greater than a preset quantity and the quantity of events that the network element 2 is not accessed is less than a second preset quantity, the network element 1 determines to access the network element 2.

In another example, the network element 1 determines, based on the first dataset, whether to access the network element 2. For details, refer to the solution 1 and the solution 2 in step 530.

In a possible implementation, when the network element 1 determines, based on the first dataset, to access the network element 2, the network element 1 stores a first event in the first dataset based on the first token, where the first event indicates that the network element 1 accesses the network element 2. When the network element 1 determines, based on the first dataset, not to access the network element 2, the network element 1 stores a second event in the first dataset based on the first token, where the second event indicates that the network element 1 does not access the network element 2. In this case, the first token further authorizes the network element 1 the to update the first dataset.

In addition, the network element 1 may further broadcast the first event or the second event to the network element in the network element group corresponding to the first dataset. For example, the network element 1 may be a network element in the network element group corresponding to the first dataset, or the network element 1 may determine, based on each piece of data in the first dataset, the network element group corresponding to the first dataset. For example, it can be learned from the foregoing content that each piece of data includes {an identifier of a network element that broadcasts the piece of data, time information, an event, event description information}. The network element 1 may determine, based on the identifier of the network element that broadcasts the piece of data in each piece of data, the network element group corresponding to the first dataset, and further broadcast the first event or the second event to the network element in the network element group.

Further, in a possible implementation, when the network element 1 determines, based on the first dataset, to access the network element 2, the network element 1 establishes a connection to the network element 2, to start a service.

Further, in a possible implementation, when the network element 1 determines, based on the first dataset, not to access the network element 2, the network element 1 may further send a reselection request message to the network repository function network element, where the reselection request message is used to request to reselect a network element of the same network element type as the network element 2. The network repository function network element receives the reselection request message from the network element 1, where the reselection request message is used to request to reselect the network element of the same network element type as the network element 2. For example, the reselection request message may include the identifier of the network element 2 and the network element type of the network element that requests to be discovered. The network repository function network element sends a reselection response message to the network element 1, where the reselection response message includes an identifier of a network element reselected for the network element 1, and the network element reselected for the network element 1 does not include the network element 2.

In addition, if the network element 1 further receives the identifier of the second dataset, the second token, and the identifier of the network element 4 from the network repository function network element, the network element 1 obtains the second dataset based on the second token and the identifier of the second dataset, and determines, based on the second dataset, whether to access the network element 4. In other words, when the network element 1 obtains identifiers of a plurality of network elements, corresponding datasets, and corresponding tokens from the network repository function network element, the network element 1 may perform determining on the dataset corresponding to each of the plurality of network elements, to determine a network element to be accessed.

According to the foregoing method, the network repository function network element can not only provide, to the first network element, an identifier of a network element of the type of the network element that requests to be discovered, but also provide, to the first network element, information needed for obtaining the dataset, so that the first network element can determine, based on the dataset, whether to access the network element that requests to be discovered this time. According to the foregoing method, the first dataset may be shared by the another network element (namely, the first network element) that may communicate with the network element 2.

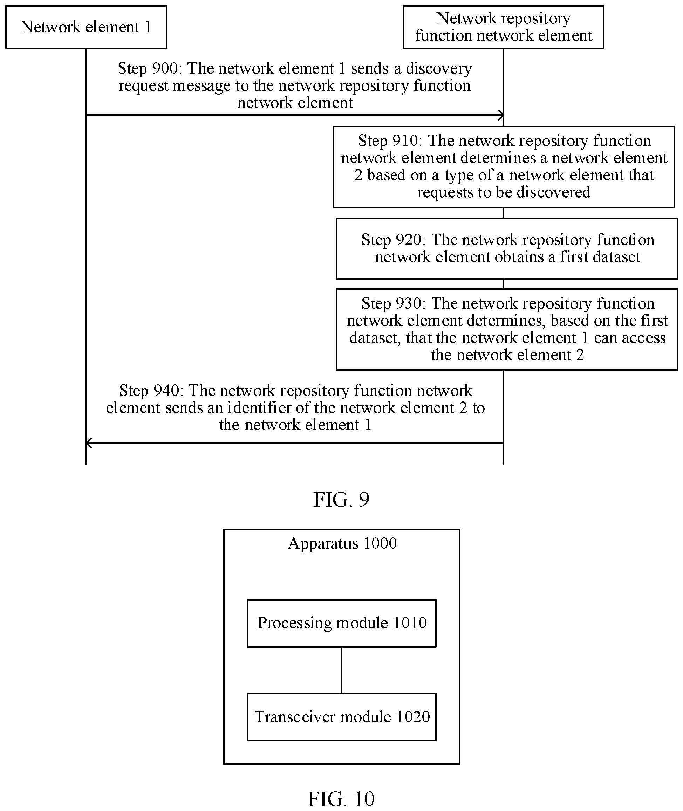

Based on this, an embodiment of this application provides a communication method. As shown in FIG. 9, the method includes the following steps.

Step 900: A network element 1 sends a discovery request message to a network repository function network element, where the discovery request message includes a type of a network element that requests to be discovered.

Step 910: The network repository function network element determines a network element 2 based on the type of the network element that requests to be discovered.

In addition, in a possible implementation, the discovery request message may further include first indication information. The first indication information indicates that a network element that performs network element discovery this time is an evaluated network element. The evaluated network element may be understood as having a dataset for evaluating the network element, in other words, having a dataset for evaluating whether the network element is capable of being accessed. Alternatively, the discovery request message may include second indication information. The second indication information indicates to feed back an evaluation result for the network element discovered this time (or indicates that the network element 1 needs to evaluate the discovered network element).

The network repository function network element determines that the network element 2 is a network element of the type of the network element that requests to be discovered, and further needs to determine whether there is a dataset for evaluating the network element 2, in other words, whether there is a first dataset. If there is the dataset, step 920 is performed.

Step 920: The network repository function network element obtains the first dataset. The first dataset includes data for evaluating a status of communication between the network element 2 and another network element.

There may be the following scenarios in which the network repository function network element obtains the first dataset:
Scenario 1: If the network repository function network element stores the first dataset, the network repository function network element performs step 930.

For example, after the network repository function network element determines the network element 2, the network repository function network element may query a historical record of the network repository function network element based on the identifier of the network element 2, to determine whether the first dataset is stored. For example, the historical record of the network repository function network element is a correspondence that is between an identifier of an evaluated network element and an identifier of a dataset and that is maintained by the network repository function network element. The first dataset herein is also the dataset for evaluating the network element 2.

Scenario 2: If the network repository function network element does not store the first dataset but stores only an identifier of the first dataset, the network repository function network element obtains the first dataset from a network element that stores the first dataset. For details, refer to step 720.

For the foregoing scenario 1 and scenario 2, the network repository function network element stores a token for the network repository function network element, and the token for the network repository function network element authorizes the network repository function network element to update the first dataset.

Scenario 3: If the network repository function network element does not store an identifier of the first dataset, the network repository function network element may obtain the identifier of the first dataset or the first dataset from another network element. In addition, the network repository function network element may further obtain a token for the network repository function network element from another network element, or the network repository function network element generates a token for the network repository function network element. This is not limited in this application.

For example, the network repository function network element sends a dataset query request message to a network element 3. The dataset query request message may be understood as requesting an evaluation result for the network element 2 or requesting the dataset for evaluating the network element 2. The dataset query request message includes the identifier of the network element 2. Similarly, the network element 3 queries a historical record of the network element 3 based on the identifier of the network element 2. For example, the historical record of the network element 3 is a correspondence that is between an identifier of an evaluated network element and an identifier of a dataset and that is maintained by the network element 3. The network element 3 may be a network element that has functions of storing an identifier of a dataset and allocating a token. For example, the network element 3 may be a network element having an analytics function, or may be referred to as an analytics network element. For example, the network element 3 may be an NWDAF network element. Alternatively, the network element 3 may be a network element co-located with another network element that has an analytics function.

The scenario 3 specifically includes the following two possible sub-scenarios:
Sub-scenario 1: If the network element 3 stores the first dataset, the network element 3 sends the first dataset to the network repository function network element. Optionally, the network element 3 sends the token for the network repository function network element to the network repository function network element.
Sub-case 2: If the network element 3 stores only the identifier of the first dataset but does not store the first dataset, the network element 3 sends the identifier of the first dataset to the network repository function network element. Optionally, the network element 3 sends, to the network repository function network element, the token for the network repository function network element and/or an identifier of a network element that stores the first dataset. In this case, the network repository function network element obtains the first dataset from the network element that stores the first dataset.

When the network repository function network element obtains a first token from the network element 3, the dataset query request message may include an identifier of the network element 1, and the network element 3 may determine the first token based on the identifier of the network element 1.

Step 930: The network repository function network element determines, based on the first dataset, that the network element 1 can access the network element 2.

For details, refer to the related descriptions in step 840. The details are not described herein again.

Step 940: The network repository function network element sends the identifier of the network element 2 to the network element 1.

When the network repository function network element determines, based on the first dataset, that the network element 1 can access the network element 2, the network repository function network element stores a third event in the first dataset based on a fourth token, where the third event indicates that the network element 1 can access the network element 2. When the network repository function network element determines, based on the first dataset, that the network element 1 cannot access the network element 2, the network repository function network element stores a fourth event in the first dataset based on the fourth token, where the fourth event indicates that the network element 1 cannot access the network element 2. In this case, the fourth token authorizes the network repository function network element to update the first dataset.

In addition, the network repository function network element may further broadcast the third event or the fourth event to a network element in a network element group corresponding to the first dataset. For example, the network repository function network element is a network element in the network element group corresponding to the first dataset, or the network repository function network element determines, based on each piece of data in the first dataset, the network element group corresponding to the first dataset. For details, refer to the related content in step 840.

In addition, the network repository function network element further determines a network element 4 based on the type of the network element that requests to be discovered, so that the network repository function network element may further obtain a second dataset, and determine, based on the second dataset, whether to access the network element 4. The second dataset includes data for evaluating a status of communication between the network element 4 and another network element.

In other words, when determining a plurality of network elements based on the type of the network element that requests to be discovered, the network repository function network element may further obtain datasets respectively corresponding to the plurality of network elements, and perform determining on the dataset corresponding to each of the plurality of network elements, to determine at least one network element that is capable of being accessed, and send an identifier of the at least one network element that is capable of being accessed to the network element 1.

According to the foregoing method, the network repository function network element may not only provide, to a first network element, an identifier of a network element of the type of the network element that requests to be discovered, but also evaluate the discovered network element, and send, to the first network element, an identifier of a network element that can communicate with the first network element after the evaluation.

FIG. 10 is a possible example block diagram of a communication apparatus according to an embodiment of this application. The apparatus 1000 includes a transceiver module 1020 and a processing module 1010. The transceiver module 1020 may include a receiving unit and a sending unit. The processing module 1010 is configured to control and manage an action of the apparatus 1000. The transceiver module 1020 is configured to support communication between the apparatus 1000 and another network entity. Optionally, the apparatus 1000 may further include a storage unit. The storage unit is configured to store program code and data of the apparatus 1000.

Optionally, each module in the apparatus 1000 may be implemented by software.

Optionally, the processing module 1010 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 1010 may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver module 1020 may be a communication interface, a transceiver, a transceiver circuit, or the like. The communication interface is a general term. In a specific implementation, the communication interface may include a plurality of interfaces. The storage unit may be a memory.

When the apparatus 1000 is a network repository function network element or a chip in the network repository function network element, the processing module 1010 in the apparatus 1000 may support the apparatus 1000 to perform an action of the network repository function network element in the foregoing method examples, for example, may support the apparatus 1000 to perform step 810 in FIG. 8.

The transceiver module 1020 may support the apparatus 1000 to communicate with a terminal device. For example, the transceiver module 1020 may support the apparatus 1000 to perform step 800 and step 820 in FIG. 8.

For example, the transceiver module 1020 is configured to receive a discovery request message from a first network element, where the discovery request message includes a type of a network element that requests to be discovered. The processing module 1010 is configured to determine a second network element based on the type of the network element that requests to be discovered. The transceiver module 1020 is configured to send an identifier of a first dataset, a first token, and an identifier of the second network element to the first network element, where the identifier of the first dataset is for obtaining the first dataset, the first dataset includes data for evaluating a status of communication between the second network element and another network element, and the first token authorizes the first network element to obtain the first dataset.

In a possible design, the discovery request message includes indication information indicating to request the identifier of the first dataset, an identifier of a network element that stores the first dataset, and the first token.

In a possible design, the transceiver module 1020 is configured to: before sending the identifier of the first dataset, the first token, and the identifier of the second network element to the first network element, send a dataset query request message to a third network element, where the dataset query request message includes the identifier of the second network element; and receive the identifier of the first dataset, the identifier of the network element that stores the first dataset, and the first token from the third network element.

In a possible design, the first token authorizes the first network element to update the first dataset.

In a possible design, the transceiver module 1020 is configured to: receive a reselection request message from the first network element, where the reselection request message is used to request to reselect a network element of the same network element type as the second network element; and send a reselection response message to the first network element, where the reselection response message includes an identifier of a network element reselected for the first network element.

In a possible design, the processing module 1010 is configured to determine a fourth network element based on the type of the network element that requests to be discovered. The transceiver module 1020 is configured to send an identifier of a second dataset, an identifier of a network element that stores the second dataset, a second token, and an identifier of the fourth network element to the first network element, where the identifier of the second dataset is for obtaining the second dataset, the second dataset includes data for evaluating a status of communication between the fourth network element and another network element, and the second token authorizes the fourth network element to obtain the second dataset. This may also be understood as: The network repository function network element may provide identifiers of a plurality of network elements and corresponding datasets and tokens to the first network element.

It should be understood that the apparatus 1000 according to this embodiment of this application may correspond to the network repository function network element in the foregoing method embodiments, and an operation and/or a function of each module in the apparatus 1000 is intended to implement a corresponding step of the method for the network repository function network element in the foregoing method embodiments. Therefore, the beneficial effects in the foregoing method embodiments can also be implemented. For brevity, details are not described herein again.

When the apparatus 1000 is a network element or a chip in the network element, the processing module 1010 in the apparatus 1000 may support the apparatus 1000 to perform an action of the network element in the foregoing method examples, for example, may support the apparatus 1000 to perform step 830 and step 840 in FIG. 8.

The transceiver module 1020 may support the apparatus 1000 to communicate with another network element. For example, the transceiver module 1020 may support the apparatus 1000 to perform step 800 and step 820 in FIG. 8.

For example, the transceiver module 1020 is configured to: send a discovery request message to a network repository function network element, where the discovery request message includes a type of a network element that requests to be discovered; and receive an identifier of a first dataset, a first token, and an identifier of a second network element from the network repository function network element, where the first token authorizes to obtain the first dataset, and the second network element is a network element of the type of the network element that requests to be discovered. The processing module 1010 is configured to: obtain the first dataset based on the first token and the identifier of the first dataset, where the first dataset includes data for evaluating a status of communication between the second network element and another network element; and determine, based on the first dataset, whether to access the second network element.

In a possible design, the first token authorizes to update the first dataset. When it is determined, based on the first dataset, to access the second network element, the processing module 1010 is configured to store a first event in the first dataset based on the first token, where the first event indicates that the second network element is accessed; or when it is determined, based on the first dataset, not to access the second network element, the processing module 1010 is configured to store a second event in the first dataset based on the first token, where the second event indicates that the second network element is not accessed.

In a possible design, when it is determined, based on the first dataset, not to access the second network element, the transceiver module 1020 is configured to send a reselection request message to the network repository function network element, where the reselection request message is used to request to reselect a network element of the same network element type as the second network element.

In a possible design, the transceiver module 1020 is configured to receive an identifier of a second dataset, a second token, and an identifier of a fourth network element from the network repository function network element, where the second token authorizes to obtain the second dataset, and the fourth network element is a network element of the type of the network element that requests to be discovered. The processing module 1010 is configured to obtain the second dataset based on the second token and the identifier of the second dataset, where the identifier of the second dataset is for obtaining the second dataset, and the second dataset includes data for evaluating a status of communication between the fourth network element and another network element. When determining not to access the second network element, the first network element determines, based on the second dataset, whether to access the fourth network element.

When the apparatus 1000 is a network element or a chip in the network element, the processing module 1010 in the apparatus 1000 may support the apparatus 1000 to perform an action of the network element in the foregoing method examples, for example, may support the apparatus 1000 to perform step 530 in FIG. 5.

The transceiver module 1020 may support the apparatus 1000 to communicate with another network element. For example, the transceiver module 1020 may support the apparatus 1000 to perform step 500 and step 510 in FIG. 5 and step 700 and step 710 in FIG. 7.

The processing module 1010 invokes the transceiver module 1020 to: obtain, from a network repository function network element, information about a network element that has communicated with a first network element; and send first indication information to a second network element, where the first indication information indicates the second network element to broadcast, to at least one network element, data for evaluating a status of communication between the second network element and the first network element, and the second network element and the at least one network element are network elements that have communicated with the first network element.

In a possible design, the transceiver module 1020 is configured to: send, to the network element that has communicated with the first network element, a request message for joining a network element group; and receive, from the at least one network element and the second network element, response messages for agreeing to join the network element group, where the network element group includes the at least one network element and the second network element.

In a possible design, the first indication information includes an identifier of a network element in the network element group and an identifier of the first network element.

In a possible design, the first indication information includes an identifier of a dataset and a token for the second network element, the dataset includes data for evaluating a status of communication between the network element in the network element group and the first network element, and the token for the second network element authorizes the second network element to update the dataset.

In a possible design, the transceiver module 1020 is configured to: before obtaining, from the network repository function network element, the information about the network element that has communicated with the first network element, receive a first message from a third network element, where the first message is for triggering evaluation on whether the first network element is capable of being accessed; and send second indication information to the third network element, where the second indication information indicates the third network element to determine, based on the dataset, whether to access the first network element.

In a possible design, the first message includes a service type of the communication between the first network element and the second network element. The processing module 1010 is configured to determine, based on the service type, data that is allowed to be broadcast and that is for evaluating a status of communication with the first network element. The transceiver module 1020 is configured to send an evaluation rule to the second network element, where the evaluation rule indicates the data that is allowed to be broadcast and that is for evaluating the status of the communication with the first network element. Alternatively, the transceiver module 1020 is configured to send, to the second network element, information indicating the service type, where the information indicating the service type is for determining data that is allowed to be broadcast and that is for evaluating a status of communication with the first network element.

In a possible design, the transceiver module 1020 is configured to send third indication information to a verification network element, where the third indication information indicates the verification network element to perform virtual-layer verification on the first network element, and update a virtual-layer verification result to the dataset.

In a possible design, the transceiver module 1020 is configured to: after sending the first indication information to the second network element, receive a second message from a fourth network element, where the second message is for triggering evaluation on whether the first network element is capable of being accessed; and send the identifier of the dataset and a token for the fourth network element to the fourth network element, where the token for the fourth network element authorizes the fourth network element to obtain the dataset.

In a possible design, the processing module 1010 is configured to determine, based on the dataset, whether to access the first network element.

In a possible design, the processing module 1010 is configured to: when determining, based on the dataset, to access the first network element, store a first event in the dataset, where the first event indicates that the first network element is accessed; or when determining, based on the dataset, not to access the first network element, store a second event in the dataset, where the second event indicates that the first network element is not accessed.

In a possible design, the transceiver module 1020 is configured to send a reselection request message to the network repository function network element when it is determined, based on the dataset, not to access the first network element and the first network element has established a connection to the second network element, where the reselection request message is used to request to reselect a network element of a same network element type as the second network element.

In a possible design, the transceiver module 1020 is configured to: when obtaining, from the network repository function network element, the information about the network element that has communicated with the first network element, send, to the network repository function network element, a message that requests the information about the network element that has communicated with the first network element; and receive, from the network repository function network element, the information about the network element that has communicated with the first network element.

When the apparatus 1000 is a network element or a chip in the network element, the processing module 1010 in the apparatus 1000 may support the apparatus 1000 to perform an action of the network element in the foregoing method examples.

The transceiver module 1020 may support the apparatus 1000 to communicate with another network element.

The transceiver module 1020 is configured to: send a first message to a second network element, where the first message is for triggering evaluation on whether a third network element is capable of being accessed; and receive indication information from the second network element, where the indication information indicates a first network element to determine, based on a dataset, whether to access the third network element, the dataset includes data for evaluating a status of communication between at least one network element and the third network element, and the at least one network element is a network element that has communicated with the third network element. The processing module 1010 is configured to determine, based on the dataset, whether to access the third network element.

In a possible design, the indication information includes an identifier of the dataset and a token, and the token authorizes to obtain the dataset.

In a possible design, the token authorizes to update the dataset. The processing module 1010 is configured to: when determining, based on the dataset, to access the third network element, store a first event in the dataset based on the token, where the first event indicates that the third network element is accessed; or when determining, based on the dataset, not to access the third network element, store a second event in the dataset based on the token, where the second event indicates that the first network element does not access the third network element.

In a possible design, the indication information includes an identifier of the at least one network element, and the first network element broadcasts the first event or the second event to the at least one network element.

In a possible design, the first message includes a service type of communication with the third network element, and the service type is for determining data that is allowed by the at least one network element to be broadcast and that is for evaluating the status of the communication with the third network element.

In a possible design, the transceiver module 1020 is configured to send a reselection request message to a network repository function network element when it is determined, based on the dataset, not to access the third network element and a connection to the third network element has been established, where the reselection request message is used to request to reselect a network element of a same network element type as the third network element.

When the apparatus 1000 is a network element or a chip in the network element, the processing module 1010 in the apparatus 1000 may support the apparatus 1000 to perform an action of the network element in the foregoing method examples.

The transceiver module 1020 may support the apparatus 1000 to communicate with another network element. For example, the transceiver module 1020 may support the apparatus 1000 to perform step 510 and step 520 in FIG. 5.

For example, the processing module 1010 invokes the transceiver module 1020 to: receive indication information from a second network element, where the indication information indicates to broadcast, to at least one network element, data for evaluating a status of communication between a first network element and a third network element, and the apparatus (or a network element in which the apparatus is located) and the at least one network element are network elements that have communicated with the third network element; and broadcast, to the at least one network element, the data for evaluating the status of the communication between the first network element and the third network element.

In a possible design, the transceiver module 1020 is configured to: before receiving the indication information from the second network element, receive, from the second network element, a request message for joining a network element group; and send, to the second network element, a response message for agreeing to join the network element group.

In a possible design, the indication information includes an identifier of a network element in the network element group and an identifier of the third network element, and the network element group includes the first network element and the at least one network element.

In a possible design, the indication information further includes an identifier of a dataset and a token, the dataset includes data for evaluating a status of communication between the network element in the network element group and the third network element, and the token authorizes to update the dataset.

In a possible design, the processing module 1010 is configured to store, in the dataset based on the token, the data for evaluating the status of the communication with the third network element.

In a possible design, the transceiver module 1020 is configured to receive data that is broadcast by the at least one network element and that is for evaluating a status of communication between the at least one network element and the third network element. The processing module 1010 is configured to store, in the dataset based on the token for the first network element, the data for evaluating the status of the communication between the at least one network element and the third network element.

It should be understood that the apparatus 1000 according to this embodiment of this application may correspond to the network element in the foregoing method embodiments, and an operation and/or a function of each module in the apparatus 1000 is intended to implement a corresponding step of the method for the network element in the foregoing method embodiments. Therefore, the beneficial effects in the foregoing method embodiments can also be implemented. For brevity, details are not described herein again.

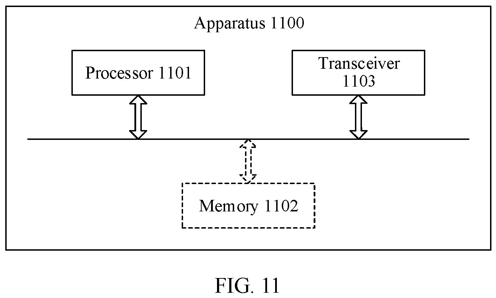

FIG. 11 is a diagram of a structure of a communication apparatus 1100 according to an embodiment of this application. As shown in FIG. 11, the apparatus 1100 includes a processor 1101.

When the apparatus 1100 is a network repository function network element or a chip in the network repository function network element, in a possible implementation, the processor 1101 is configured to invoke an interface to perform the following actions:
receiving a discovery request message from a first network element, where the discovery request message includes a type of a network element that requests to be discovered; determining a second network element based on the type of the network element that requests to be discovered; and sending an identifier of a first dataset, a first token, and an identifier of the second network element to the first network element, where the identifier of the first dataset is for obtaining the first dataset, the first dataset includes data for evaluating a status of communication between the second network element and another network element, and the first token authorizes the first network element to obtain the first dataset.

It should be understood that the apparatus 1100 may be further configured to perform other steps and/or operations on a network repository function network element side in the foregoing embodiments. For brevity, details are not described herein again.

When the apparatus 1100 is a network element or a chip in the network element, in a possible implementation, the processor 1101 is configured to invoke an interface to perform the following actions:
sending a discovery request message to a network repository function network element, where the discovery request message includes a type of a network element that requests to be discovered; receiving an identifier of a first dataset, a first token, and an identifier of a second network element from the network repository function network element, where the first token authorizes a first network element to obtain the first dataset, and the second network element is a network element of the type of the network element that requests to be discovered; obtaining the first dataset based on the first token and the identifier of the first dataset, where the first dataset includes data for evaluating a status of communication between the second network element and another network element; and determining, based on the first dataset, whether to access the second network element.

In a possible implementation, the processor 1101 is configured to invoke an interface to perform the following actions:
obtaining, from a network repository function network element, information about a network element that has communicated with a first network element; and sending first indication information to a second network element, where the first indication information indicates the second network element to broadcast, to at least one network element, data for evaluating a status of communication between the second network element and the first network element, and the second network element and the at least one network element are network elements that have communicated with the first network element.

In a possible implementation, the processor 1101 is configured to invoke an interface to perform the following actions:
sending a first message to a second network element, where the first message is for triggering evaluation on whether a third network element is capable of being accessed; receiving indication information from the second network element, where the indication information indicates a first network element to determine, based on a dataset, whether to access the third network element, the dataset includes data for evaluating a status of communication between at least one network element and the third network element, and the at least one network element is a network element that has communicated with the third network element; and determining, based on the dataset, whether to access the third network element.

In a possible implementation, the processor 1101 is configured to invoke an interface to perform the following actions:
receiving indication information from a second network element, where the indication information indicates to broadcast, to at least one network element, data for evaluating a status of communication between a first network element and a third network element, and the apparatus (or a network element in which the apparatus is located) and the at least one network element are network elements that have communicated with the third network element; and broadcasting, to the at least one network element, the data for evaluating the status of the communication between the first network element and the third network element.

It should be understood that the apparatus 1100 may be further configured to perform other steps and/or operations on a network element side in the foregoing embodiments. For brevity, details are not described herein again.

It should be understood that the processor 1101 may invoke the interface to perform the foregoing receiving and sending actions. The invoked interface may be a logic interface or a physical interface. This is not limited. Optionally, the physical interface may be implemented by a transceiver. Optionally, the apparatus 1100 further includes a transceiver 1103.

Optionally, the apparatus 1100 further includes a memory 1102, and the memory 1102 may store program code in the foregoing method embodiments for invoking by the processor 1101.

Specifically, if the apparatus 1100 includes the processor 1101, the memory 1102, and the transceiver 1103, the processor 1101, the memory 1102, and the transceiver 1103 communicate with each other by using an internal connection path to transfer a control signal and/or a data signal. In a possible design, the processor 1101, the memory 1102, and the transceiver 1103 may be implemented by a chip. The processor 1101, the memory 1102, and the transceiver 1103 may be implemented in a same chip, or may be separately implemented in different chips, or a combination of any two functions is implemented in one chip. The memory 1102 may store program code. The processor 1101 invokes the program code stored in the memory 1102 to implement a corresponding function of the apparatus 1100.

The method disclosed in the foregoing embodiments of this application may be applied to a processor, or may be implemented by the processor. The processor may be an integrated circuit chip and has a signal processing capability. In an implementation process, the steps in the foregoing method embodiments may be implemented by using a hardware integrated logical circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware assembly, may be a system on chip (system on chip, SoC), may be a central processing unit (central processor unit, CPU), may be a network processor (network processor, NP), may be a digital signal processor (digital signal processor, DSP), may be a micro control unit (micro controller unit, MCU), or may be a programmable logic device (programmable logic device, PLD) or another integrated chip. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

It should also be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, the functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

## Claims

1. A communication method, wherein the method comprises:
receiving, by a network repository function network element, a discovery request message from a first network element, wherein the discovery request message comprises a type of a network element that requests to be discovered;
determining, by the network repository function network element, a second network element based on the type of the network element that requests to be discovered; and
sending, by the network repository function network element, an identifier of a first dataset, a first token, and an identifier of the second network element to the first network element, wherein the identifier of the first dataset is for obtaining the first dataset, the first dataset comprises data for evaluating a status of communication between the second network element and another network element, and the first token authorizes the first network element to obtain the first dataset.

2. The method according to claim 1, wherein the discovery request message comprises indication information indicating to request the identifier of the first dataset and the first token.

3. The method according to claim 1 or 2, wherein before the sending, by the network repository function network element, an identifier of a first dataset, a first token, and an identifier of the second network element to the first network element, the method further comprises:
sending, by the network repository function network element, a dataset query request message to a third network element, wherein the dataset query request message comprises the identifier of the second network element; and
receiving, by the network repository function network element, the identifier of the first dataset and the first token from the third network element.

4. The method according to any one of claims 1 to 3, wherein the first token authorizes the first network element to update the first dataset.

5. The method according to any one of claims 1 to 4, further comprising:
receiving, by the network repository function network element, a reselection request message from the first network element, wherein the reselection request message is used to request to reselect a network element of the same network element type as the second network element; and
sending, by the network repository function network element, a reselection response message to the first network element, wherein the reselection response message comprises an identifier of a network element reselected for the first network element.

6. The method according to any one of claims 1 to 5, wherein the data for evaluating the status of the communication between the another network element and the second network element comprises error information or warning information recorded by the another network element in a process of the communication between the another network element and the second network element.

7. The method according to any one of claims 1 to 6, further comprising:
determining, by the network repository function network element, a fourth network element based on the type of the network element that requests to be discovered; and
sending, by the network repository function network element, an identifier of a second dataset, a second token, and an identifier of the fourth network element to the first network element, wherein the identifier of the second dataset is for obtaining the second dataset, the second dataset comprises data for evaluating a status of communication between the fourth network element and another network element, and the second token authorizes the fourth network element to obtain the second dataset.

8. A communication method, wherein the method comprises:
sending, by a first network element, a discovery request message to a network repository function network element, wherein the discovery request message comprises a type of a network element that requests to be discovered;
receiving, by the first network element, an identifier of a first dataset, a first token, and an identifier of a second network element from the network repository function network element, wherein the first token authorizes the first network element to obtain the first dataset, and the second network element is a network element of the type of the network element that requests to be discovered;
obtaining, by the first network element, the first dataset based on the first token and the identifier of the first dataset, wherein the first dataset comprises data for evaluating a status of communication between the second network element and another network element; and
determining, by the first network element based on the first dataset, whether to access the second network element.

9. The method according to claim 8, wherein the first token authorizes the first network element to update the first dataset; and
the method further comprises:
when the first network element determines, based on the first dataset, to access the second network element, storing, by the first network element, a first event in the first dataset based on the first token, wherein the first event indicates that the first network element accesses the second network element; or
when the first network element determines, based on the first dataset, not to access the second network element, storing, by the first network element, a second event in the first dataset based on the first token, wherein the second event indicates that the first network element does not access the second network element.

10. The method according to claim 8 or 9, further comprising:
when the first network element determines, based on the first dataset, not to access the second network element, sending, by the first network element, a reselection request message to the network repository function network element, wherein the reselection request message is used to request to reselect a network element of the same network element type as the second network element.

11. The method according to any one of claims 8 to 10, wherein the data for evaluating the status of the communication between the another network element and the second network element comprises error information or warning information recorded by the another network element in a process of the communication between the another network element and the second network element.

12. The method according to any one of claims 8 to 11, further comprising:
receiving, by the first network element, an identifier of a second dataset, a second token, and an identifier of a fourth network element from the network repository function network element, wherein the second token authorizes the first network element to obtain the second dataset, and the fourth network element is a network element of the type of the network element that requests to be discovered;
obtaining, by the first network element, the second dataset based on the second token and the identifier of the second dataset, wherein the second dataset comprises data for evaluating a status of communication between the fourth network element and another network element; and
when the first network element determines not to access the second network element, determining, by the first network element based on the second dataset, whether to access the fourth network element.

13. A communication method, wherein the method comprises:
obtaining, from a network repository function network element, information about a network element that has communicated with a first network element; and
sending first indication information to a second network element, wherein the first indication information indicates the second network element to broadcast, to at least one network element, data for evaluating a status of communication between the second network element and the first network element, and the second network element and the at least one network element are network elements that have communicated with the first network element.

14. The method according to claim 13, further comprising:
sending, to the network element that has communicated with the first network element, a request message for joining a network element group; and
receiving, from the at least one network element and the second network element, response messages for agreeing to join the network element group, wherein the network element group comprises the at least one network element and the second network element.

15. The method according to claim 13 or 14, wherein the first indication information comprises an identifier of a network element in the network element group and an identifier of the first network element.

16. The method according to claim 14 or 15, wherein the first indication information comprises an identifier of a dataset and a token for the second network element, the dataset comprises data for evaluating a status of communication between the network element in the network element group and the first network element, and the token for the second network element authorizes the second network element to update the dataset.

17. The method according to claim 16, wherein before the obtaining, from a network repository function network element, information about a network element that has communicated with a first network element, the method further comprises:
receiving a first message from a third network element, wherein the first message is for triggering evaluation on whether the first network element is capable of being accessed; and
the method further comprises:
sending second indication information to the third network element, wherein the second indication information indicates the third network element to determine, based on the dataset, whether to access the first network element.

18. The method according to claim 17, wherein the first message comprises a service type of the communication between the first network element and the second network element; and
the method further comprises:
determining, based on the service type, data that is allowed to be broadcast and that is for evaluating a status of communication with the first network element; and sending an evaluation rule to the second network element, wherein the evaluation rule indicates the data that is allowed to be broadcast and that is for evaluating the status of the communication with the first network element;
or
sending, to the second network element, information indicating the service type, wherein the information indicating the service type is for determining data that is allowed to be broadcast and that is for evaluating a status of communication with the first network element.

19. The method according to any one of claims 16 to 18, further comprising:
sending third indication information to a verification network element, wherein the third indication information indicates the verification network element to perform virtual-layer verification on the first network element and update a virtual-layer verification result to the dataset.

20. The method according to any one of claims 16 to 19, wherein after the sending first indication information to a second network element, the method further comprises:
receiving a second message from a fourth network element, wherein the second message is for triggering evaluation on whether the first network element is capable of being accessed; and
sending the identifier of the dataset and a token for the fourth network element to the fourth network element, wherein the token for the fourth network element authorizes the fourth network element to obtain the dataset.

21. The method according to any one of claims 16 to 20, further comprising:
determining, based on the dataset, whether to access the first network element.

22. The method according to claim 21, further comprising:
when determining, based on the dataset, to access the first network element, storing a first event in the dataset, wherein the first event indicates that the first network element is accessed; or
when determining, based on the dataset, not to access the first network element, storing a second event in the dataset, wherein the second event indicates that the first network element is not accessed.

23. The method according to claim 22, further comprising:
sending a reselection request message to the network repository function network element when determining, based on the dataset, not to access the first network element and having established a connection to the first network element, wherein the reselection request message is used to request to reselect a network element of a same network element type as the first network element.

24. The method according to any one of claims 13 to 23, wherein the obtaining, from a network repository function network element, information about a network element that has communicated with a first network element comprises:
sending, to the network repository function network element, a message requesting the information about the network element that has communicated with the first network element; and
receiving, from the network repository function network element, the information about the network element that has communicated with the first network element.

25. The method according to any one of claims 13 to 24, wherein the data for evaluating the status of the communication between the second network element and the first network element comprises error information or warning information recorded by the second network element in a process of the communication between the second network element and the first network element.

26. A communication method, wherein the method comprises:
sending, by a first network element, a first message to a second network element, wherein the first message is for triggering evaluation on whether a third network element is capable of being accessed;
receiving, by the first network element, indication information from the second network element, wherein the indication information indicates the first network element to determine, based on a dataset, whether to access the third network element, the dataset comprises data for evaluating a status of communication between at least one network element and the third network element, and the at least one network element is a network element that has communicated with the third network element; and
determining, by the first network element based on the dataset, whether to access the third network element.

27. The method according to claim 26, wherein the indication information comprises an identifier of the dataset and a token for the first network element, and the token for the first network element authorizes the first network element to obtain the dataset.

28. The method according to claim 26 or 27, wherein the token for the first network element authorizes the first network element to update the dataset; and
the method further comprises:
when the first network element determines, based on the dataset, to access the third network element, storing, by the first network element, a first event in the dataset based on the token for the first network element, wherein the first event indicates that the first network element accesses the third network element; or
when the first network element determines, based on the dataset, not to access the third network element, storing, by the first network element, a second event in the dataset based on the token for the first network element, wherein the second event indicates that the first network element does not access the third network element.

29. The method according to claim 28, wherein the indication information comprises an identifier of the at least one network element; and
the method further comprises:
broadcasting, by the first network element, the first event or the second event to the at least one network element.

30. The method according to any one of claims 26 to 29, wherein the first message comprises a service type of communication between the first network element and the third network element; and
the service type is for determining data that is allowed by the at least one network element to be broadcast and that is for evaluating a status of communication with the third network element.

31. The method according to any one of claims 26 to 30, further comprising:
when the first network element determines, based on the dataset, not to access the third network element and the first network element has established a connection to the third network element, sending, by the first network element, a reselection request message to a network repository function network element, wherein the reselection request message is used to request to reselect a network element of a same network element type as the third network element.

32. A communication method, wherein the method comprises:
receiving, by a first network element, indication information from a second network element, wherein the indication information indicates the first network element to broadcast, to at least one network element, data for evaluating a status of communication between the first network element and a third network element, and the first network element and the at least one network element are network elements that have communicated with the third network element; and
broadcasting, by the first network element to the at least one network element, the data for evaluating the status of the communication between the first network element and the third network element.

33. The method according to claim 32, wherein before the receiving, by a first network element, indication information from a second network element, the method further comprises:
receiving, by the first network element from the second network element, a request message for joining a network element group; and
sending, by the first network element to the second network element, a response message for agreeing to join the network element group.

34. The method according to claim 32 or 33, wherein the indication information comprises an identifier of a network element in the network element group and an identifier of the third network element, and the network element group comprises the first network element and the at least one network element.

35. The method according to claim 34, wherein the indication information further comprises an identifier of a dataset and a token for the first network element, the dataset comprises data for evaluating a status of communication between the network element in the network element group and the third network element, and the token for the first network element authorizes the first network element to update the dataset.

36. The method according to any one of claims 32 to 35, wherein the first network element stores, in the dataset based on the token for the first network element, the data for evaluating the status of the communication between the first network element and the third network element.

37. The method according to any one of claims 32 to 36, further comprising:
receiving, by the first network element, data that is broadcast by the at least one network element and that is for evaluating a status of communication between the at least one network element and the third network element; and
storing, by the first network element in the dataset based on the token for the first network element, the data for evaluating the status of the communication between the at least one network element and the third network element.

38. The method according to any one of claims 32 to 37, further comprising:
receiving, by the first network element, an evaluation rule from the second network element, wherein the evaluation rule indicates data that is allowed to be broadcast and that is for evaluating a status of communication with the third network element; and
when the first network element broadcasts, to the at least one network element, the data for evaluating the status of the communication between the first network element and the third network element, broadcasting, by the first network element to the at least one network element according to the evaluation rule, the data for evaluating the status of the communication between the first network element and the third network element.

39. The method according to any one of claims 32 to 38, further comprising:
receiving, by the first network element from the second network element, information indicating a service type of the communication between the first network element and the third network element;
determining, by the first network element, an evaluation rule based on the service type, wherein the evaluation rule indicates data that is allowed to be broadcast and that is for evaluating a status of communication with the third network element; and
when the first network element broadcasts, to the at least one network element, the data for evaluating the status of the communication between the first network element and the third network element, broadcasting, by the first network element to the at least one network element according to the evaluation rule, the data for evaluating the status of the communication between the first network element and the third network element.

40. The method according to any one of claims 32 to 39, wherein the data for evaluating the status of the communication between the first network element and the third network element comprises error information or warning information recorded by the first network element in a process of the communication between the first network element and the third network element.

41. A communication apparatus, comprising:
a memory, configured to store computer instructions; and
a processor, configured to execute the computer instructions, to enable the communication apparatus to perform the method according to any one of claims 1 to 40.

42. A communication apparatus, comprising a processor and an interface circuit, wherein the interface circuit is configured to: receive a signal from a communication apparatus other than the communication apparatus and transmit the signal to the processor, or send, to a communication apparatus other than the communication apparatus, a signal that is from the processor; and the processor is configured to implement the method according to any one of claims 1 to 40 by using a logic circuit or by executing code instructions.

43. A computer-readable storage medium, wherein the storage medium stores a computer program or instructions; and when the computer program or the instructions is/are executed by a communication apparatus, the method according to any one of claims 1 to 40 is implemented.

44. A computer program product, wherein the computer program product comprises a computer program; and when the computer program is run on an apparatus, the method according to any one of claims 1 to 40 is performed.

45. A communication system, wherein the system comprises an apparatus configured to perform the method according to any one of claims 1 to 7 and an apparatus configured to perform the method according to any one of claims 8 to 12.

46. A communication system, wherein the system comprises one or more of an apparatus configured to perform the method according to any one of claims 13 to 25, an apparatus configured to perform the method according to any one of claims 26 to 31, or an apparatus configured to perform the method according to any one of claims 32 to 40.

47. A communication method, wherein the method comprises:
sending, by a first network element, a discovery request message to a network repository function network element, wherein the discovery request message comprises a type of a network element that requests to be discovered;
receiving, by the network repository function network element, the discovery request message from the first network element;
determining, by the network repository function network element, a second network element based on the type of the network element that requests to be discovered; and
sending, by the network repository function network element, an identifier of a first dataset, a first token, and an identifier of the second network element to the first network element, wherein the identifier of the first dataset is for obtaining the first dataset, the first dataset comprises data for evaluating a status of communication between the second network element and another network element, and the first token authorizes the first network element to obtain the first dataset.

48. The method according to claim 47, further comprising:
receiving, by the first network element, the identifier of the first dataset, the first token, and the identifier of the second network element from the network repository function network element;
obtaining, by the first network element, the first dataset based on the first token and the identifier of the first dataset; and
determining, by the first network element based on the first dataset, whether to access the second network element.

49. A communication method, wherein the method comprises:
sending, by a first network element, a discovery request message to a network repository function network element, wherein the discovery request message comprises a type of a network element that requests to be discovered;
sending, by the network repository function network element, an identifier of a first dataset, a first token, and an identifier of a second network element to the first network element, wherein the first token authorizes the first network element to obtain the first dataset, and the second network element is a network element of the type of the network element that requests to be discovered;
receiving, by the first network element, the identifier of the first dataset, the first token, and the identifier of the second network element;
obtaining, by the first network element, the first dataset based on the first token and the identifier of the first dataset, wherein the first dataset comprises data for evaluating a status of communication between the second network element and another network element; and
determining, by the first network element based on the first dataset, whether to access the second network element.

50. A communication method, wherein the method comprises:
obtaining, from a network repository function network element, information about a network element that has communicated with a first network element; and
sending first indication information to a second network element, wherein the first indication information indicates the second network element to broadcast, to at least one network element, data for evaluating a status of communication between the second network element and the first network element, and the second network element and the at least one network element are network elements that have communicated with the first network element; and
the method further comprises: sending, by the network repository function network element, the information about the network element that has communicated with the first network element.

51. A communication method, wherein the method comprises:
sending, by a first network element, a first message to a second network element, wherein the first message is for triggering evaluation on whether a third network element is capable of being accessed;
receiving, by the second network element, the first message, and sending indication information to the first network element, wherein the indication information indicates the first network element to determine, based on a dataset, whether to access the third network element, the dataset comprises data for evaluating a status of communication between at least one network element and the third network element, and the at least one network element is a network element that has communicated with the third network element;
receiving, by the first network element, the indication information; and
determining, by the first network element based on the dataset, whether to access the third network element.

52. A communication method, wherein the method comprises:
sending, by a second network element, indication information to a first network element, wherein the indication information indicates the first network element to broadcast, to at least one network element, data for evaluating a status of communication between the first network element and a third network element, and the first network element and the at least one network element are network elements that have communicated with the third network element;
receiving, by the first network element, the indication information; and
broadcasting, by the first network element to the at least one network element, the data for evaluating the status of the communication between the first network element and the third network element.
